# EUROPEAN PATENT APPLICATION

(11) **EP 4 756 573 A1**
(43) Date of publication of application: **10.06.2026**
(21) Application number: 24881272.9
(22) Date of filing: 03.09.2024
(51) Int. Cl.: G06F 1/3234

(54) **INTERFACE DISPLAY METHOD AND ELECTRONIC DEVICE**

(30) Priority: 27.10.2023 CN 202311422184
(71) Applicant: Honor Device Co., Ltd., Shenzhen, Guangdong 518040 (CN)
(72) Inventor: QIU, Jianbin, Shenzhen, Guangdong 518040 (CN)
(74) Representative: Isarpatent
(86) International application number: PCT/CN2024/116523
(87) International publication number: WO 2025/086905

(57) **Abstract**

An interface display method and a device are provided. The method includes: receiving an access request of a target interface; determining an animation element of a first type from elements of the target interface in response to the access request; and displaying the target interface, and displaying the animation element of the first type in the target interface in a manner of continuously displaying a same image frame. Through embodiments of this application, power consumption of an electronic device when displaying a user interface including the animation element of the first type can be reduced.

## Description

This application claims priority to Chinese Patent Application No. 202311422184.6, filed with the China National Intellectual Property Administration on October 27, 2023 and entitled "INTERFACE DISPLAY METHOD AND ELECTRONIC DEVICE", which is incorporated herein by reference in its entirety.

### TECHNICAL FIELD

This application relates to the technical field of intelligent terminals, and in particular, to an interface display method and an electronic device.

### BACKGROUND

A user interface (user interface, UI) displayed in an electronic device may include a plurality of elements, so as to provide intuitive information for a user through the plurality of elements. Elements on the user interface may be divided into animation elements and non-animation elements.

When the electronic device displays the user interface, for the animation element on the user interface, the electronic device needs to perform operations of drawing, rendering, and displaying each image frame of the animation element based on a frame rate (for example, a default frame rate of a device), so that a display effect of playing the animation element on the electronic device is achieved.

However, if the user interface includes the animation element, and in particular, includes a plurality of animation elements, for each of the animation elements on a target interface, the electronic device needs to draw, render, and display each of the image frames of the animation elements based on a frame rate. As a result, power consumption of the electronic device when displaying the user interface including the animation element is relatively high.

### SUMMARY

Embodiments of this application provide an interface display method and an electronic device, which can reduce power consumption of the electronic device when displaying a user interface including an animation element.

According to a first aspect, an embodiment of this application provides an interface display method applied to an electronic device. The method includes: receiving an access request of a target interface; determining an animation element of a first type from elements of the target interface in response to the access request; and displaying the target interface, and displaying the animation element of the first type in the target interface in a manner of continuously displaying a same image frame. The foregoing animation element of the first type may be a non-sensitive animation element in a subsequent embodiment. In this method, the electronic device needs to draw and render only one image frame of the animation element of the first type, so as to reduce a quantity of times of drawing and rendering the animation element of the first type, thereby reducing power consumption of displaying the first type animation element, and reducing power consumption of displaying the target interface.

Optionally, the displaying the target interface, and displaying the animation element of the first type in the target interface in a manner of continuously displaying a same image frame includes: obtaining, for each interface image frame of the target interface, an attribute value of the animation element of the first type in the interface image frame; updating, when the attribute value of the animation element of the first type in the interface image frame is different from a target attribute value of the animation element of the first type, the attribute value of the animation element of the first type in the interface image frame to the target attribute value; and displaying the interface image frame of the target interface based on an updated attribute value of the animation element of the first type.

Optionally, the method further includes: displaying the interface image frame of the target interface based on the attribute value of the animation element of the first type in the interface image frame when the attribute value of the animation element of the first type in the interface image frame is the same as the target attribute value of the animation element of the first type.

Optionally, the displaying the animation element of the first type in a manner of continuously displaying a same image frame includes: displaying the animation element of the first type in a manner of continuously displaying a first image frame of the animation element of the first type.

Optionally, the displaying the target interface, and displaying the animation element of the first type in the target interface in a manner of continuously displaying a same image frame includes: displaying, for a first interface image frame of the target interface, the first interface image frame of the target interface based on an attribute value of the animation element of the first type in the first interface image frame; obtaining, for a non-first interface image frame of the target interface, an attribute value of the animation element of the first type in the interface image frame, and updating the attribute value of the animation element of the first type in the interface image frame to an attribute value of the animation element of the first type in the first interface image frame; and displaying the interface image frame of the target interface based on the updated attribute value of the animation element of the first type.

Optionally, the determining an animation element of the first type from elements of the target interface includes: obtaining a type of each element in the target interface; and determining, as the animation element of the first type, an element among the elements of the target interface whose type is a preset type.

Optionally, the determining an animation element of the first type from elements of the target interface includes: obtaining a type of each element in the target interface and a size of a display region; and determining, as the animation element of the first type, an element among the elements of the target interface whose type is a preset type and whose display region size is less than a preset size threshold.

Optionally, before the displaying the target interface, the method further includes:
determining that a power saving mode of the electronic device is enabled; or
determining that a power saving mode displayed on an interface is enabled; or
determining that a battery level of the electronic device is not greater than a preset battery level threshold; or
determining that a real-time time is within a preset time threshold; or
determining that a usage habit of a user satisfies a preset trigger condition.

Optionally, the animation element of the first type includes an animation element of at least one type such as a rotation animation element, a translation animation element, a scaling animation element, or a gradient animation element.

According to a second aspect, an embodiment of this application provides an electronic device, including a processor and a memory. One or more computer programs are stored in the memory. The one or more computer programs include instructions. The instructions, when executed by the processor, cause the electronic device to perform the method in any one of the first aspect.

According to a third aspect, an embodiment of this application provides a computer-readable storage medium. The computer-readable storage medium stores a computer program. The computer program, when run on a computer, causes the computer to perform the method in any one of the first aspect.

### BRIEF DESCRIPTION OF DRAWINGS

To describe technical solutions of embodiments of this application more clearly, the following briefly introduces the drawings required for describing the embodiments. Apparently, the drawings in the following description show only some embodiments of this application, and a person of ordinary skill in the art may still derive other drawings from these drawings without creative efforts.
FIG. 1A is a schematic structural diagram of an electronic device according to an embodiment of this application;
FIG. 1B is a schematic diagram of a software structure of an electronic device according to an embodiment of this application;
FIG. 2 is a schematic diagram of interface implementation of displaying a power saving mode in a setting interface according to an embodiment of this application;
FIG. 3A is a schematic diagram of interface implementation of a desktop of a mobile phone in a related technology according to an embodiment of this application;
FIG. 3B is a schematic diagram of interface display of a desktop of a mobile phone according to an interface display method of an embodiment of this application;
FIG. 4A is a schematic diagram of interface implementation of a user interface of a short video APP in a related technology according to an embodiment of this application;
FIG. 4B is a schematic diagram of interface implementation of a user interface of a short video APP in an interface display method according to an embodiment of this application;
FIG. 5A is a schematic diagram of interface implementation of a first page of a search engine APP in a related technology according to an embodiment of this application;
FIG. 5B is a schematic diagram of interface implementation of a first page of a search engine APP in an interface display method according to an embodiment of this application;
FIG. 6A is a schematic diagram of interface implementation of a video playback interface of a video APP in a related technology according to an embodiment of this application;
FIG. 6B is a schematic diagram of interface implementation of a video playback interface of a video APP in an interface display method according to an embodiment of this application;
FIG. 7A is a schematic diagram of interface implementation of a main interface of a video APP in a related technology according to an embodiment of this application;
FIG. 7B is a schematic diagram of interface implementation for a main interface of a video APP in an interface display method according to an embodiment of this application;
FIG. 8A is a schematic diagram of interface implementation of a setting interface of an application in a related technology according to an embodiment of this application;
FIG. 8B is a schematic diagram of interface implementation of a setting interface of an application in an interface display method according to an embodiment of this application;
FIG. 9A is a schematic diagram of interface implementation of a mobile phone search interface of an electronic mall application in a related technology according to an embodiment of this application;
FIG. 9B is a schematic diagram of interface implementation of a mobile phone search interface of an electronic mall application in an interface display method according to an embodiment of this application;
FIG. 10A is a schematic diagram of interface implementation of a scanning interface when a quick response code is scanned in a related technology according to an embodiment of this application;
FIG. 10B is a schematic diagram of interface implementation of a scanning interface when a quick response code is scanned in an interface display method according to an embodiment of this application;
FIG. 11A is a schematic diagram of interface implementation of a red packet according to an embodiment of this application;
FIG. 11B is another schematic diagram of interface implementation of a user interface of a short video APP in an interface display method according to an embodiment of this application
FIG. 12 is a schematic structural diagram of another electronic device according to an embodiment of this application;
FIG. 13 is a schematic diagram of a principle for determining a rendering region based on a drawing tree according to an embodiment of this application;
FIG. 14 is a schematic structural diagram of an implementation for a drawing tree of a target interface according to an embodiment of this application; and
FIG. 15 is a schematic flowchart of an interface display method according to an embodiment of this application.

### DESCRIPTION OF EMBODIMENTS

Terms used in implementations of this application are merely intended to explain specific embodiments of this application, and are not intended to limit this application.

A user interface (user interface, UI) displayed in an electronic device may include a plurality of elements, which may be specifically divided into an animation element and a non-animation element. The animation element is an element having a dynamic effect. In other words, displayed content of the animation element changes with time during a display process. The non-animation element is an element other than the animation element, and is an element having no dynamic effect. In other words, display content of the non-animation element keeps unchanged in a display process.

For example, the user interface may be a desktop of the electronic device, an interface displayed by an application of the electronic device, or the like. In some related technologies, the desktop of the electronic device may also be considered as an interface displayed by a system application of the electronic device.

For example, the desktop of the electronic device may include the animation element and the non-animation element. The animation element may include a dynamic icon, an animation component, an animation background, and the like. The non-animation element may include a static icon, a static component, a static background, and the like.

The dynamic icon on the desktop of the electronic device may be, for example, a clock icon displayed on the desktop of the electronic device. When the desktop includes the clock icon, the electronic device draws and plays the clock icon at a default frame rate of a device. On a user visible dimension, a second hand, a minute hand, and an hour hand on the clock icon are continuously updated and played. Alternatively, the dynamic icon on the desktop of the electronic device may be, for example, an application (application, APP) icon having an animation effect displayed on the desktop of the electronic device. When the desktop includes the APP icon having the animation effect, the electronic device draws and plays the APP icon at the default frame rate of the device. On the user visible dimension, the animation effect of the APP icon is continuously updated and played.

The animation component on the desktop of the electronic device may be, for example, a small animation component displayed on the desktop of the electronic device. For example, the small animation component may be a weather forecasting component. The electronic device draws and plays the weather forecasting component at the default frame rate of the device. On the user visible dimension, the weather forecasting component updates a temperature value with time. For example, the small animation component may alternatively be a music player component. The electronic device draws and plays the music player component at the default frame rate of the device. On the user visible dimension, the music player component rotates a record picture displayed on the component at a speed to indicate that music is being played.

The animation background on the desktop of the electronic device may be, for example, a dynamic wallpaper of the desktop of the electronic device. For example, the electronic device draws and plays the dynamic wallpaper at the default frame rate of the device. On the user visible dimension, the dynamic wallpaper of the desktop is continuously updated and plays a dynamic display effect of the dynamic wallpaper.

For example, an interface displayed by some APPs may include the animation element and the non-animation element. The animation element may include a video, an animation component, an animation background, and the like. The non-animation element may include a picture, text, a static background, and the like.

The video may be a video played on a display interface of a video APP or a short video APP. The electronic device draws and plays the video at the default frame rate of the device. On the user visible dimension, the video is continuously updated and played on a display interface of the electronic device.

The animation component may be a specified animation component on the display interface of the APP, for example, a background music source displayed in a scrolling manner, or a record icon displayed in a rotating manner of the video APP or the short video APP. The animation component may further be an animation component specified in a display interface of a map APP, for example, a prompt animation component such as an overspeed prompt component, a construction road condition prompt component, a speed limitation prompt component, a lane change prompt component, and a road exit prompt on a navigation interface. The electronic device draws and plays various prompt animation components at the default frame rate of the device. On the user visible dimension, when the user is about to drive to a specified position including a prompt animation component, the electronic device displays the corresponding prompt animation component at an adaptive position of the navigation interface. After passing the specified position, the electronic device does not display the prompt animation component on the navigation interface.

The animation background may be a dynamic wallpaper of the display interface of the APP. The electronic device draws and plays the dynamic wallpaper at the default frame rate of the device. On the user visible dimension, the dynamic wallpaper of the display interface of the APP continuously updates and plays a dynamic display effect of the dynamic wallpaper.

When displaying the user interface, the electronic device needs to perform a drawing operation on the animation element and the non-animation element included in the user interface. For the animation element, because display content continuously changes, the electronic device needs to continuously perform operations of drawing, rendering, and displaying each image frame of the animation element based on the default frame rate of the device, to achieve a display effect of refreshing and playing the animation element. The non-animation element only needs to be drawn once, and does not need to be drawn repeatedly based on the default frame rate. It may be learned that the electronic device needs to consume more power consumption to display the animation element compared with the non-animation element.

Therefore, if the user interface includes the animation element, power consumption of the electronic device is relatively high when the user interface is displayed. Especially when the user interface includes a large quantity of animation elements, more power consumption is consumed by the electronic device because the animation elements in the user interface are displayed.

However, actually, in the animation elements included in the user interface, some animation elements which a user pays little or even no attention to when the user uses the user interface, and do not affect an operation of the user on the user interface exist. In other words, some animation elements that are accompanying animations exist. In terms of a function carried by such animations for the user, the purpose of arranging such animations on the user interface is mainly to improve visual experience of the user rather than carry a specific function, and does not affect a functional operation performed by the user on the user interface. That is to say, even if the animation of the animation elements stops, use of the user interface by the user is not affected. From the perspective of pursuing to reduce power consumption, or for a user who does not pursue such visual experience, displaying, by the electronic device, such animation elements on the user interface causes unnecessary power consumption waste.

The foregoing animation icon of the APP on the desktop of the device is sued as an example. For the user, when browsing the desktop of the device, the user rarely pays attention to a dynamic change of the animation icon on the desktop, and whether the icon is an animation icon does not affect the user to start a corresponding APP on the desktop of the device.

For another example, a record icon is displayed in a rotating manner on the display interface of the short video APP. For the user, the user rarely pays attention to rotation of the record icon when browsing the interface of the short video APP, and whether the record icon is an animation does not affect triggering of an icon function of the record icon by the user.

In an embodiment of this application, an animation element with which the user pays little attention, or with which the user pays no attention, or without affecting the functional operation performed by the user on the user interface is referred to as a non-sensitive animation element. An animation element with which the user pays much attention or affecting the functional operation performed by the user on the user interface is referred to as a sensitive animation element.

To reduce power consumption of the electronic device when the user interface including the animation element is displayed, embodiments of this application provide an interface display method and a device. When the user interface is displayed, the sensitive animation element and the non-animation element on the user interface are normally displayed, while the non-sensitive animation element on the user interface is prevented from playing an animation, so that the non-sensitive animation element is displayed in a manner of continuously displaying a same image frame. On the user visible dimension, when the user opens the user interface, the animation element with which the user pays attention is normally played, and other elements, including the non-sensitive animation element, are all represented as non-animation elements, and a displayed image does not change.

The interface display method provided in embodiments of this application may be applied to an electronic device having a display screen, such as a portable computer (for example, a mobile phone), a tablet computer, a notebook computer, a personal computer (personal computer, PC), a wearable electronic device (for example, a smart watch), an augmented reality (augmented reality, AR) device/a virtual reality (virtual reality, VR) device, or an on-board computer. This is not limited in embodiments of this application.

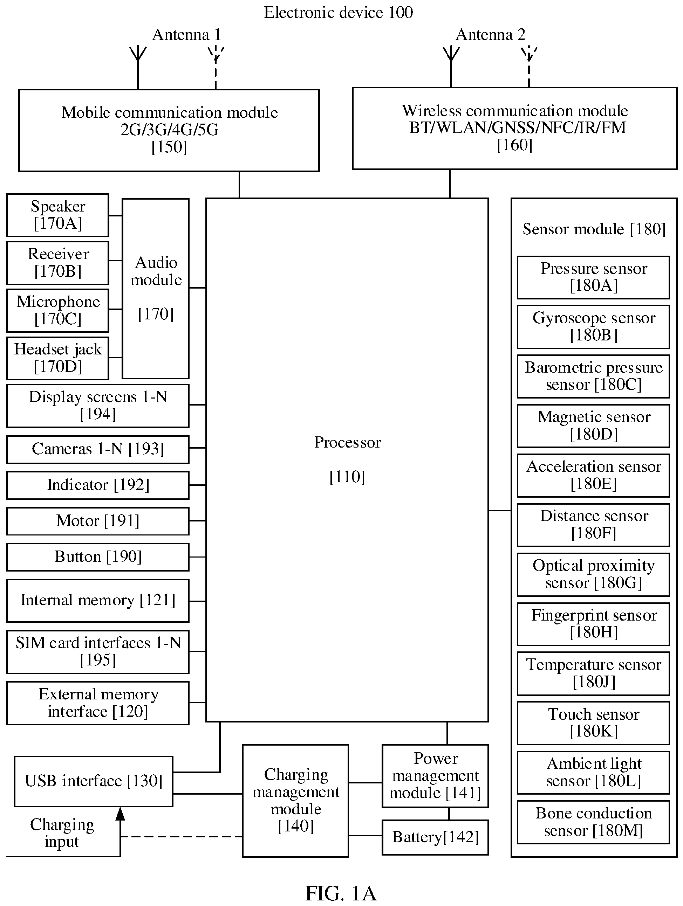

FIG. 1A is a schematic structural diagram of an electronic device 100 according to an embodiment of this application. The electronic device 100 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, and an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like.

It may be understood that an example structure in this embodiment of the present invention does not constitute a specific limitation on the electronic device 100. In some other embodiments of this application, the electronic device 100 may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be devices independent of each other, or may be integrated in one or more processors.

The controller may generate an operation control signal based on instruction operation code and a timing signal, and control obtaining and execution of instructions.

A memory may be further arranged in the processor 110, and is configured to store instructions and data. In some embodiments, the memory in the processor 110 is a cache memory. The memory may store instructions or data that is recently used or cyclically used by the processor 110. If the processor 110 needs to use the instructions or the data again, the processor may directly call the instructions or the data from the memory. Repeated access is avoided, and waiting time of the processor 110 is reduced, thereby improving system efficiency.

In some embodiments, the processor 110 may include one or more interfaces. The interface may include an integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (serial clock line, SCL). In some embodiments, the processor 110 may include a plurality of I2C buses. The processor 110 may be respectively coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to perform a function of answering a call through a Bluetooth headset.

The PCM interface may be configured to perform audio communication, to sample, quantize, and encode an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to perform the function of answering a call through the Bluetooth headset. The I2S interface and the PCM interface both may be configured to perform audio communication.

The UART interface is a universal serial data bus, and is configured to perform asynchronous communication. The bus may be a bidirectional communication bus. The UART interface converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to perform a function of playing music through the Bluetooth headset.

The MIPI may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured through software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may further be configured as an I2C interface, an I2S interface, a UART interface, an MIPI, and the like.

The USB interface 130 is an interface that complies with the USB standard specification, and may be specifically a mini USB interface, a micro USB interface, a USB type C interface, or the like. The USB interface 130 may be configured to connect to a charger to charge the electronic device 100, or may be configured to perform data transmission between the electronic device 100 and the peripheral device. The USB interface may alternatively be configured to connect to a headset to play an audio through the headset. The interface may further be configured to connect to another electronic device such as an AR device.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the above embodiment, or use a combination of a plurality of the interface connection manners.

The charging management module 140 is configured to receive a charging input from the charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to be connected to the battery 142, the charging management module 140, and the processor 110. The power management module 141 receives an input of the battery 142 and/or the charging management module 140, to supply power to the processor 110, the internal memory 121, the display screen 194, the camera 193, the wireless communication module 160, and the like. The power management module 141 may further be configured to monitor parameters such as a battery capacity, a quantity of battery cycles, and a battery health state (power leakage and impedance). In some other embodiments, the power management module 141 may alternatively be arranged in the processor 110. In some other embodiments, the power management module 141 and the charging management module 140 may also be arranged in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may further be multiplexed to increase a utilization rate of the antennas. For example, the antenna 1 may be multiplexed as a diversity antenna of a wireless local area network. In some other embodiments, the antennas may be used in combination with a tuning switch.

The mobile communication module 150 may provide a solution to wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some function modules of the mobile communication module 150 may be arranged in the processor 110. In some embodiments, at least some of the functional modules of the mobile communication module 150 may be arranged in a same device as at least some of modules of the processor 110.

The modem processor may include a modulator and a demodulator. The modulator is configured to modulate a to-be-transmitted low-frequency baseband signal into a medium or high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (this is not limited to the speaker 170A, the receiver 170B, and the like), or displays an image or a video through the display screen 194. In some embodiments, the modem processor may be an independent device. In some other embodiments, the modem processor may be independent of the processor 110, and is arranged in a same device as the mobile communication module 150 or another functional module.

The wireless communication module 160 may provide a solution to wireless communication applied to the electronic device 100, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components into which at least one communication processing module is integrated. The wireless communication module 160 receives an electromagnetic wave through the antenna 2, performs frequency modulation and filtering on the electromagnetic wave signal, and sends the processed signal to the processor 110. The wireless communication module 160 may further receive a to-be-transmitted signal from the processor 110, perform frequency modulation and amplification on the to-be-transmitted signal, and convert the to-be-transmitted signal into an electromagnetic wave through the antenna 2 for radiation.

In some embodiments, the antenna 1 and the mobile communication module 150 are coupled, and the antenna 2 and the wireless communication module 160 of the electronic device 100 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculation, and is configured to perform graphics rendering. The processor 110 may include one or more GPUs configured to execute program instructions to generate or change display information.

The display screen 194 is configured to display an image, a video, or the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Mini led, a MicroLed, a Micro-oLed, a quantum dot light emitting diode (quantum dot light emitting diodes, QLED), and the like. In some embodiments, the electronic device 100 may include 1 or N display screens 194. N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element of the camera through a lens, and the optical signal is converted into an electrical signal. The photosensitive element of the camera transmits the electrical signal to the ISP for processing, and the electrical signal is converted into an image visible to a naked eye. The ISP may further perform algorithm optimization on a noise point, brightness, and a skin tone of the image. The ISP may further optimize parameters such as an exposure and a color temperature of scenario for which an image is to be taken. In some embodiments, the ISP may be arranged in the camera 193.

The camera 193 is configured to capture a static image or a video. An optical image is generated for an object through the lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include 1 or N cameras 193, N being a positive integer greater than 1.

The digital signal processor is configured to process a digital signal. In addition to a digital image signal, the digital signal processor may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, and quickly processes input information by using a biological neural network structure such as a mode of transmission between human-brain nerve cells, and may further constantly perform self-learning. Applications such as intelligent cognition of the electronic device 100, for example, image recognition, facial recognition, speech recognition, and text understanding, may be implemented through the NPU.

The external memory interface 120 may be configured to connect to an external storage card such as a micro SD card, to expand a storage capacity of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playback function or an image playback function), and the like. The data storage area may store data (for example, audio data and an address book), and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS). The processor 110 runs the instructions stored in the internal memory 121, and/or the instructions stored in the memory arranged in the processor, to perform various function applications and data processing of the electronic device 100.

The electronic device 100 may implement an audio function such as music playback or recording through the audio module 170, the speaker 170A, the receiver 170B, the microphone 170C, the headset jack 170D, the application processor, and the like. The audio function includes, for example, music playing and sound recording.

The audio module 170 is configured to convert digital audio information into an analog audio signal for output, and is further configured to convert an analog audio input into a digital audio signal. The audio module 170 may further be configured to code and decode the audio signal. In some embodiments, the audio module 170 may be arranged in the processor 110, or some function modules in the audio module 170 are arranged in the processor 110.

The speaker 170A, also referred to as a "horn", is configured to convert an electrical audio signal into a sound signal. The electronic device 100 may be used to listen to music or listen to a hands-free call through the speaker 170A.

The receiver 170B, also referred to as a "handset", is configured to convert an electrical audio signal into a sound signal. When the electronic device 100 is configured to answer a call or receive voice information, the receiver 170B may be put close to a human ear to receive a voice.

The microphone 170C, also referred to as "voice tube" or "mike", is configured to convert the sound signal into an electrical signal. When making a call or sending voice information, a user may make a sound approaching the microphone 170C through a mouth of the user, to input a sound signal into the microphone 170C. At least one microphone 170C may be arranged in the electronic device 100. In some other embodiments, two microphones 170C may be arranged in the electronic device 100, to collect a sound signal and implement a noise reduction function. In some other embodiments, three, four, or more microphones 170C may be alternatively arranged in the electronic device 100, to collect a sound signal, implement noise reduction, recognize a sound source, implement a directional recording function, and the like.

The headset jack 170D is configured to be connected to a wired headset. The headset jack 170D may be a USB interface 130, or may be a 3.5 mm open mobile electronic device platform (open mobile terminal platform, OMTP) standard interface or cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button. The button may alternatively be a touch button. The electronic device 100 may receive a button input, and generate a button signal input related to user setting and function control of the electronic device 100.

The motor 191 may generate a vibration prompt. The motor 191 may be configured to provide a vibration prompt for an incoming call, or may be configured to provide vibration feedback for touch. For example, touch operations performed on different applications (for example, photographing and audio playback) may correspond to different vibration feedback effects. The motor 191 may also correspond to different vibration feedback effects for touch operations performed on different regions of the display screen 194. Different application scenarios (for example, a time reminder, information receiving, an alarm clock, and a game) may also correspond to different vibration feedback effects. The touch vibration feedback effect may alternatively be customized.

The indicator 192 may be an indicator light, and may be configured to indicate a charging state or a battery change, or may be configured to indicate a message, a missed call, a notification, and the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support 1 or N SIM card interfaces, N being a positive integer greater than 1. The SIM card interface 195 may support a Nano SIM card, a Micro SIM card, a SIM card, or the like. A plurality of cards may be inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network through a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a microkernel architecture, a microservice architecture, or a cloud architecture. In this embodiment of the present invention, the software structure of the electronic device 100 is described by using an Android (Android) system with a layered architecture as an example.

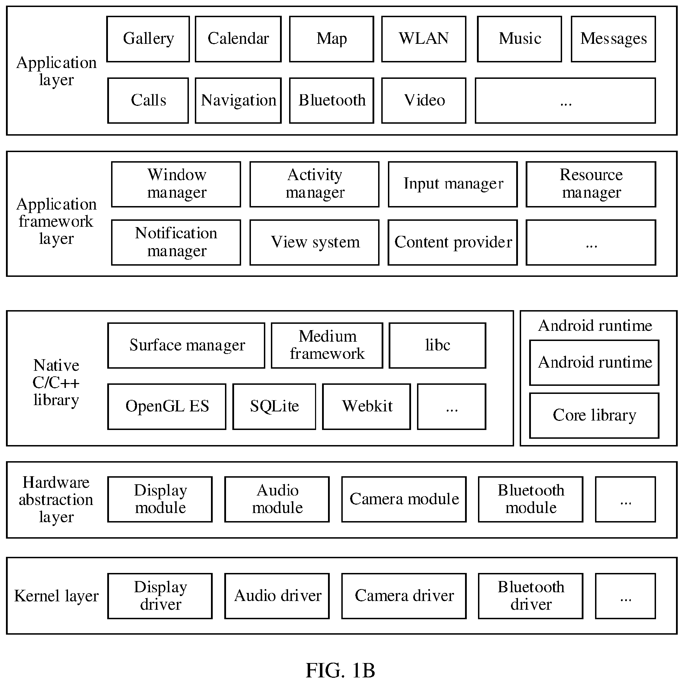

FIG. 1B is a block diagram of a software structure of an electronic device 100 according to an embodiment of the present invention.

In a hierarchical architecture, software is divided into several layers, each of which has a clear role and task. The layers communicate with each other through a software interface. In some embodiments, an Android system is divided into five layers from top to bottom: an application layer, an application framework layer (also referred to as a system framework layer), a system library and Android runtime layer, a hardware abstraction layer (hardware abstraction layer, HAL), and a kernel layer.

The application layer may include several applications (applications for short below). In this embodiment of this application, the application layer may include applications such as Camera, Gallery, Calendar, Phone, Map, Navigation, WLAN, Bluetooth, Music, Video, and SMS messages.

The application framework layer provides an application interface (Application Programming Interface, API) and a programming framework for an application at the application layer, including various components and services to support a developer in Android development.

The system library and Android runtime layer includes a system library and Android runtime (Android Runtime). The system library may include a plurality of functional modules, for example, a surface manager and a libc. The Android runtime is responsible for scheduling and management of the Android system, and specifically includes a core library and a virtual machine. Specifically, the core library includes two parts: one part is a performance function that the Java language needs to invoke, and the other part is a core library of Android. The virtual machine is configured to run an Android application that is developed in the Java language.

The HAL layer is an interface layer located between an operating system kernel and a hardware circuit. The HAL layer includes, but is not limited to, an audio hardware abstraction layer (Audio HAL) and a camera hardware abstraction layer (Camera HAL). The Audio HAL is configured to process an audio stream, for example, to perform processing such as noise reduction and directional enhancement on the audio stream. The Camera HAL is configured to process an image stream.

The kernel layer is a layer between hardware and software. The kernel layer may include a display driver, a camera driver, an audio driver, a sensor driver, and the like. The display screen driver is configured to drive a display screen.

Based on the foregoing structure of the electronic device illustrated in FIG. 1A and FIG. 1B, the interface display method in embodiments of this application is described below.

In the interface display method in embodiments of this application, for a user interface to be displayed, a non-sensitive animation element included in the user interface is first identified and selected, and playing of the animation of the non-sensitive animation element is stopped when the user interface is displayed. In other words, when the user interface is displayed, the non-sensitive animation element on the user interface continuously displays a same image frame, so that the non-sensitive animation element is a non-animation element on a user visible dimension, that is, an image of the non-sensitive animation element viewed by the user on the user interface does not change. In addition, elements on the user interface other than the non-sensitive animation elements are normally displayed, for example, the sensitive animation elements are still refreshed at a default frame rate of a device, thereby ensuring normal use of the user interface and use experience of the user.

In some embodiments, the interface display method in embodiments of this application may be implemented as a function or middleware provided by an operating system of the electronic device. In other words, according to the interface display method in embodiments of this application, the operating system of the electronic device may determine and identify the non-sensitive animation element on the user interface, and stop playing of the animation of the non-sensitive animation element when the user interface is displayed. In this case, for an application, the application still draws an image of the non-sensitive animation element. In other words, the application still invokes a related service to display a user interface of the electronic device based on a related technology, and playing of the animation of the non-sensitive animation element of the user interface is not stopped.

Exemplary descriptions are provided below.

For example, the electronic device may provide a power saving mode. When a battery level of the electronic device reaches or is lower than a battery level threshold, the electronic device enters the power saving mode and executes a power saving policy, to prolong a use duration of the electronic device. The interface display method in embodiments of this application may be used as one of power saving policies of the electronic device, and is triggered to be executed when the electronic device enters the power saving mode.

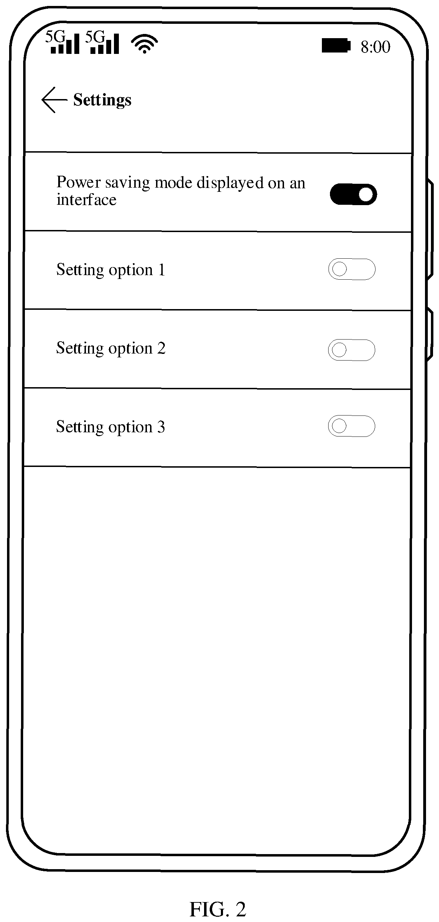

For example, a setting application of the electronic device may provide a power saving mode for interface display. As shown in FIG. 2, a user may autonomously set whether to enable the power saving mode for interface display. If the user enables the power saving mode, the electronic device may perform the interface display method in embodiments of this application when the battery level of the electronic device reaches or is lower than a battery level threshold, thereby reducing power consumption of displaying the user interface by the electronic device.

For example, the electronic device may preset to perform the interface display method in embodiments of this application within a preset time period. Specifically, the preset time period may be autonomously set by the electronic device, manually set by a user, or the like.

For example, the electronic device may learn a usage habit of the user. When the usage habit of the user satisfies a preset trigger condition of the electronic device, the electronic device performs the interface display method in embodiments of this application, thereby reducing power consumption of displaying the user interface by the electronic device. For example, the electronic device learns the usage habit of the user, and determines that an average duration of continuous use of the electronic device by the user is 1 hour per day within a time period (for example, 10 days). The preset trigger condition that the average duration of continuous use of the electronic device by the user is not less than 30 minutes is satisfied. In this case, the electronic device triggers to perform the interface display method in embodiments of this application, thereby reducing power consumption of displaying the user interface by the electronic device.

The non-sensitive animation element in embodiments of this application is an animation element on the user interface that a user pays little attention to or pays no attention to and does not affect a functional operation performed by the user on the user interface. In other words, stopping of the non-sensitive animation element does not affect use and the functional operation performed by the user on the user interface. Correspondingly, an animation element other than the non-sensitive animation element is the sensitive animation element. The sensitive animation element is usually an animation element followed by the user on the user interface, or an animation element that affects the functional operation performed by the user on the user interface, or an animation element that the user affects refresh, play, or pause of an animation based on the functional operation performed on the user interface.

Optionally, the non-sensitive animation element occupies a relatively small region on the user interface. In some related technologies, the non-sensitive animation element may also be referred to as a small animation. A location of the non-sensitive animation element on the user interface is not fixed, for example, the non-sensitive animation element may be located at an edge or a center of the user interface.

Optionally, in terms of technical implementation, the non-sensitive animation element may include an animation element of the following types: a rotation animation, a translation animation, a scaling animation, a gradient animation, or a combination of the foregoing animation forms.

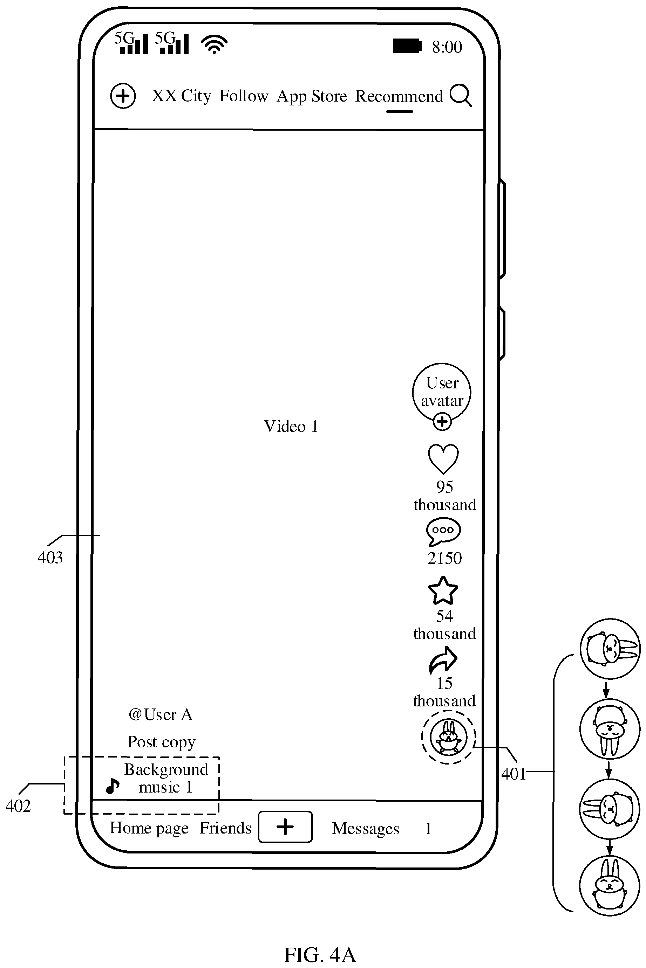

On a user visible dimension, the rotation animation generally simulates a rotation effect of a player. A visual effect can be improved by using the rotation effect, but the rotation animation does not carry any special functions itself. For a specific example, reference is made to FIG. 4A.

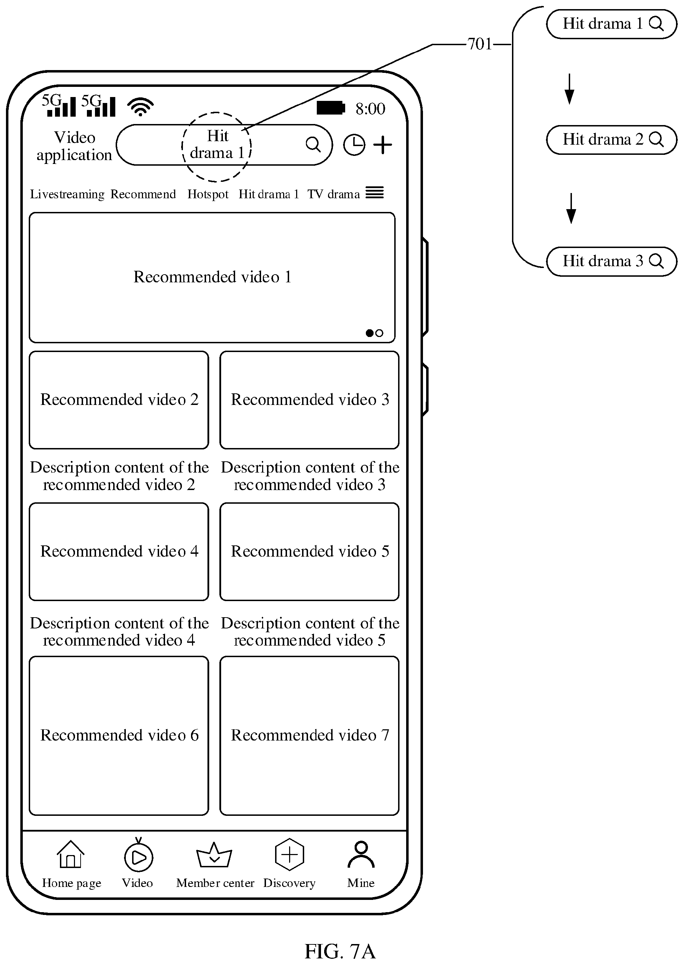

On the user visible dimension, the translation animation generally simulates an offset change of an animation in a horizontal or longitudinal position. For example, the animation pops up in a translational manner when a screen is touched, and the animation hides in a translational manner when the screen is not touched. For a specific example, reference is made to FIG. 7A, FIG. 8A, FIG. 10A, and the like.

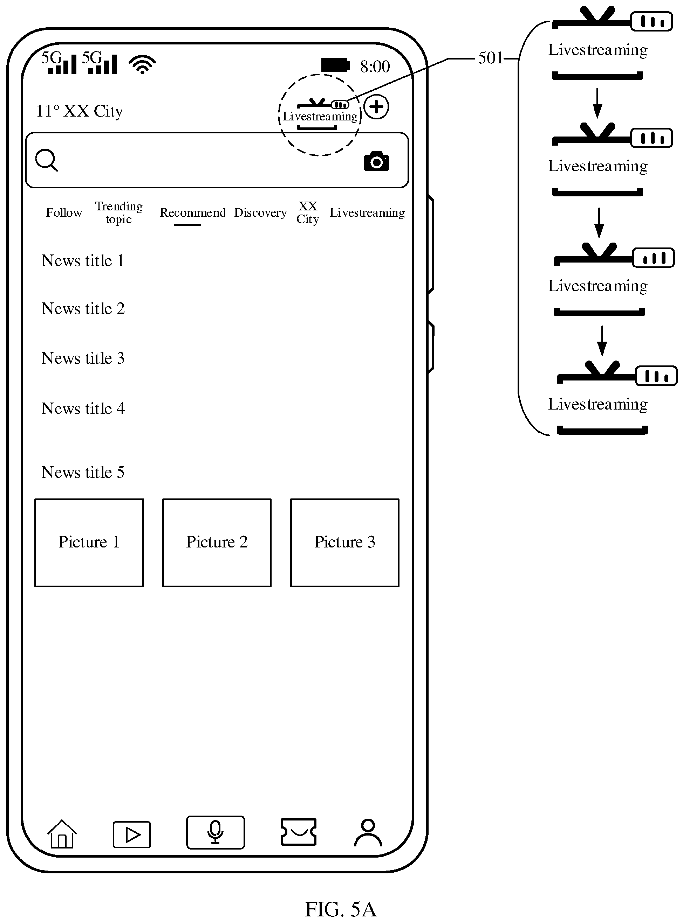

On the user visible dimension, the scaling animation generally simulates a uniform size change of an animation. For example, in the examples shown in FIG. 5A, FIG. 6A, FIG. 9A, and the like, three vertical bars are scaled in different degrees during playing a special effect, to achieve a dynamic effect.

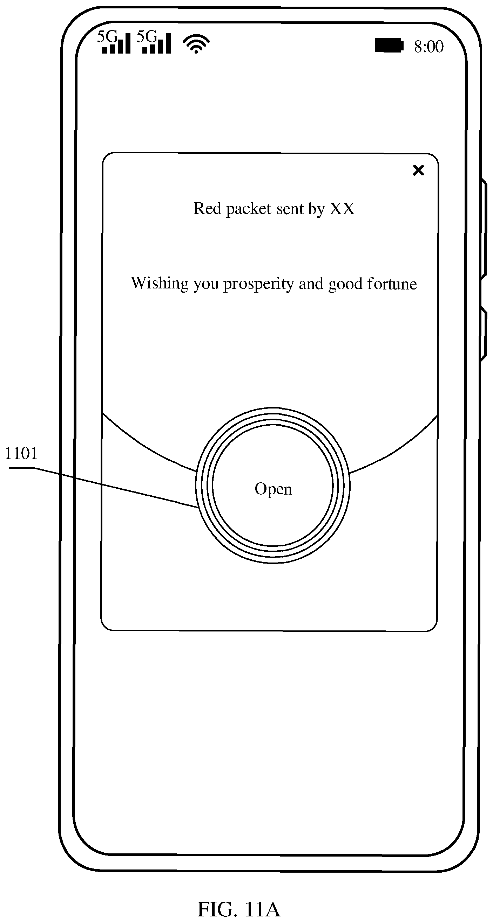

On the user visible dimension, the gradient animation usually simulates a transparency change of an animation, and is usually used to change a background color, a text color, a button color, and the like, to enhance a visual effect and highlight a change of a current state. For a specific example, reference is made to FIG. 11A.

To better describe implementation of the interface display method in embodiments of this application, the following embodiment uses an example in which the electronic device is a mobile phone. The following first illustratively describes, by means of comparison, implementation of a user interface including a non-sensitive animation element in the related technology, and implementation of a user interface including a non-sensitive animation element in the interface display method in embodiments of this application.

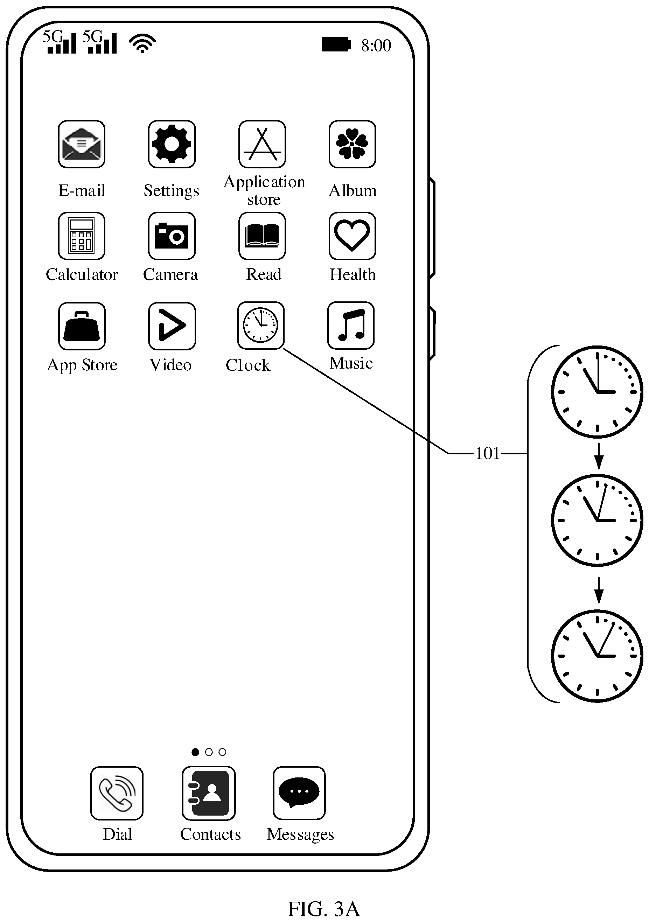

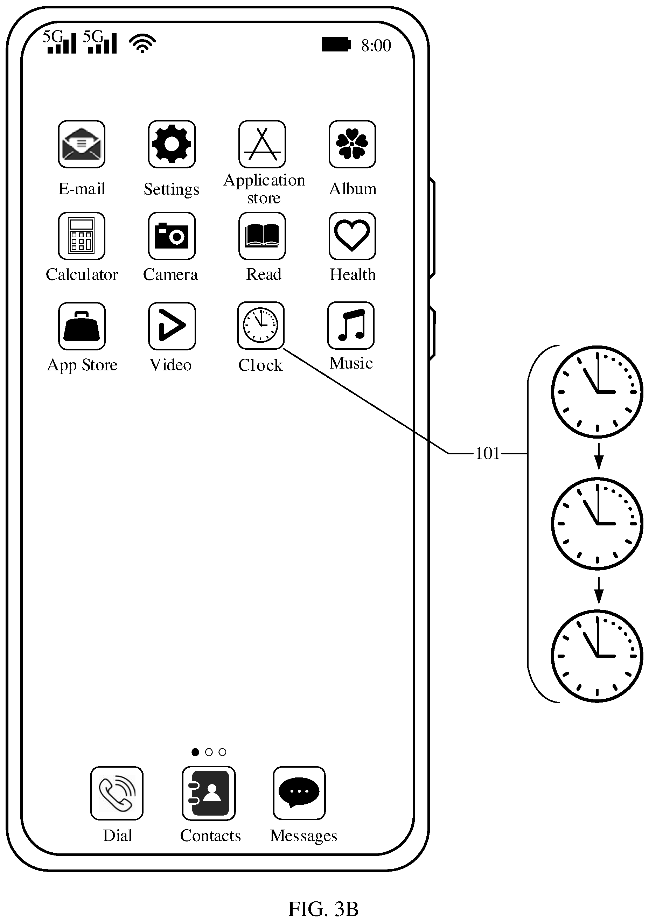

Referring to FIG. 3A and FIG. 3B, an example in which the non-sensitive animation element is a clock icon on a desktop of a mobile phone is used. It is assumed that elements on the desktop of the mobile phone shown in FIG. 3A and FIG. 3B are all non-animation elements except for the clock icon.

Referring to FIG. 3A, in the related technology, when the desktop of the mobile phone is displayed, the mobile phone draws and plays an animation of a clock icon 301 at a default frame rate of a device. On a user visible dimension, a second hand, a minute hand, and an hour hand of the clock icon 301 continuously change. Reference may be made to an enlarged display region on a right side of FIG. 3A, and a schematic diagram showing a change of an image of the clock icon 301 with time is provided.

Referring to FIG. 3B, according to the interface display method provided in this embodiment of this application, when the desktop of the mobile phone is displayed, the mobile phone stops animation playback for the clock icon 301, and continuously displays a same image frame. On a user visible dimension, because the interface of the mobile phone is opened, the image displayed by the clock icon 301 does not change. Referring to a display region on the right side of FIG. 3B, a schematic diagram showing that the image of an icon 302 does not change with time is provided.

It can be known by comparison that in a related technology, the mobile phone needs to continuously draw and play the image of the clock icon 301 at the default frame rate of the device. However, according to the interface display method provided in this embodiment of this application, only one image frame of the clock icon 301 needs to be drawn, and the image frame is constantly displayed, so that power consumption for displaying the clock icon 301 is relatively less, and power consumption for displaying the desktop of the mobile phone is relatively less.

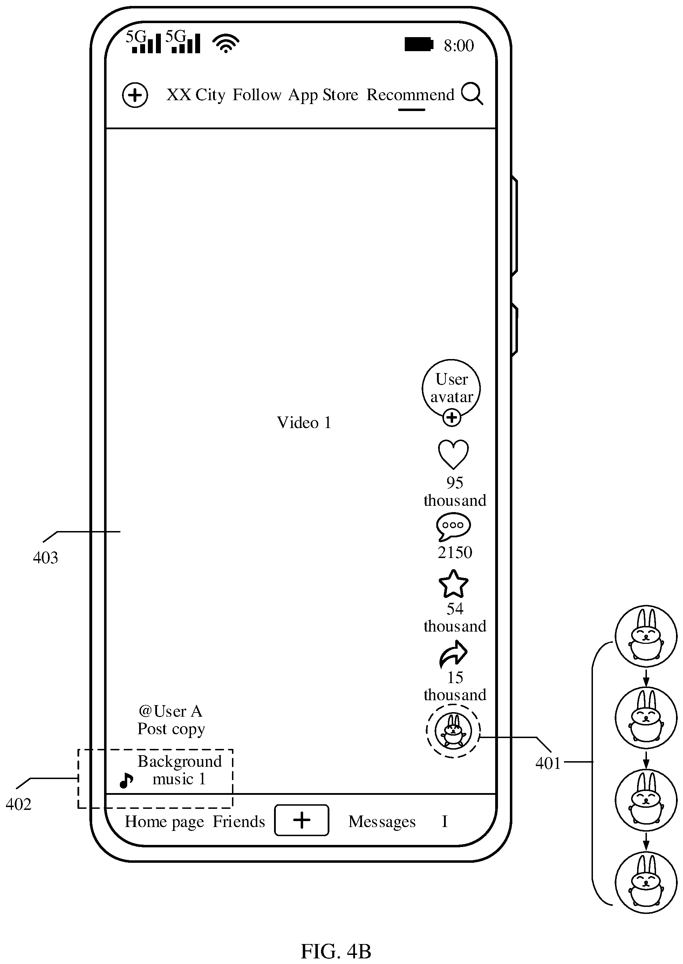

Referring to FIG. 4A and FIG. 4B, a user interface of a short video APP is used as an example. It is assumed that the user interface of the short video APP includes non-sensitive animation elements including a "spin record" component 401 and a "background music 1" component 402 and a sensitive animation element including a "video 1" 403, and other elements are non-animation elements.

Referring to FIG. 4A, in the related technology, when the user interface of the short video APP is displayed, the mobile phone draws and plays, on a user interface at a default frame rate of the device, the non-sensitive animation elements including the "spin record" component 401 and the "background music 1" component 402, and the sensitive animation element including the "video 1" 403. On a user visible dimension, after the user interface is enabled, the mobile phone plays the "video 1" 403. Meanwhile, the mobile phone continuously plays the "spin record" component 401 in a rotation manner and the "background music 1" component 402 in a scrolling manner. For example, referring to a display region on a right side of FIG. 4A, a schematic diagram showing a change of an image played by the "spin record" component 401 with time is provided.

Referring to FIG. 4B, according to the interface display method provided in this embodiment of this application, when a same user interface is displayed, the mobile phone draws and plays the "video 1" 403 at a default frame rate of the device, and stops animation playback for the "spin record" component 401 and the "background music 1" component 402. The "spin record" component 401 and the "background music 1" component 402 are respectively displayed in a manner of continuously displaying a same image frame. Referring to an enlarged display region on a right side of FIG. 4B, on a user visible dimension, the "video 1" 403 is normally played from a moment at which the user opens a user interface 420, while the images of the "spin record" component 401 and the "background music 1" component 402 do not change with time.

It can be known by comparison that in the related technology, the mobile phone needs to continuously draw and play each image frame of the "spin record" component 401 and the "background music 1" component 402 at a default frame rate of the device. However, according to the interface display method in this embodiment of this application, the mobile phone needs to draw only one image frame of the "spin record" component 401 and the "background music 1" component 402, so that power consumption of displaying the "spin record" component 401 and the "background music 1" component 402 is relatively small, and power consumption of displaying the user interface of the short video APP is relatively small.

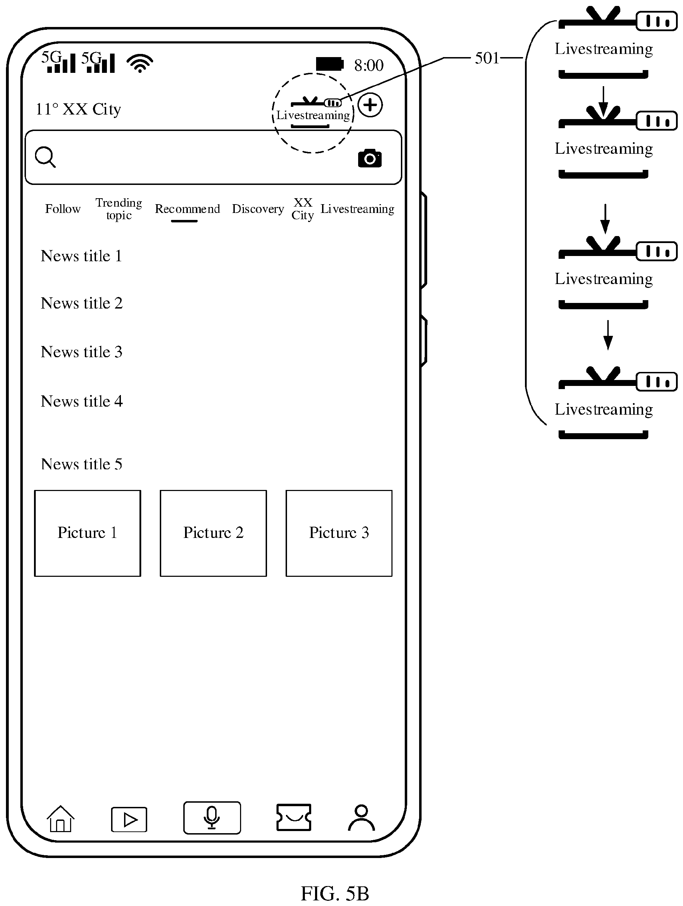

Referring to FIG. 5A and FIG. 5B, a home page of a search engine APP is used as an example. It is assumed that the home page of the search engine APP includes a non-sensitive animation element including a "live streaming" component 501 and another non-animation element. The non-animation elements include a news content, a news figure, and the like.

Referring to FIG. 5A, in the related technology, when the home page of the search engine APP is displayed, the mobile phone draws and plays the "live streaming" component 501 at a default frame rate of the mobile phone. On a user visible dimension, when the home page of the search engine APP is displayed, the mobile phone plays an animation of the "live streaming" component 501. Reference may be made to an enlarged display region on a right side of FIG. 5A, and a schematic diagram showing a change played by the "live streaming" component 501 is provided. When the user performs an operation such as a pull-down slide or a left-right slide on the home page of the search engine APP to browse news, playback of the "live streaming" component 501 is not affected.

Referring to FIG. 5B, according to the interface display method provided in this embodiment of this application, when a home page of a search engine APP is displayed, the mobile phone stops animation playback for the "live streaming" component 501, and continuously displays a same image frame. On a user visible dimension, when the home page of the search engine APP is displayed, the image of the "live streaming" component 501 does not change. Reference may be made to an enlarged display region on a right side of FIG. 5B, and a schematic diagram showing that the image of the "live streaming" component 501 does not change with time is provided. When the user performs an operation such as a pull-down slide or a left-right slide on the home page of the search engine APP to browse news, playback of the "live streaming" component 501 is not affected.

It can be known by comparison that in the related technology, the mobile phone needs to continuously draw and play each image frame of the "live streaming" component at the default frame rate of the device. However, according to the interface display method provided in this embodiment of this application, the mobile phone needs to draw only one image frame of the "live streaming" component, so that power consumption of displaying the "live streaming" component is relatively small, and power consumption of displaying the home page of the search engine APP is relatively small.

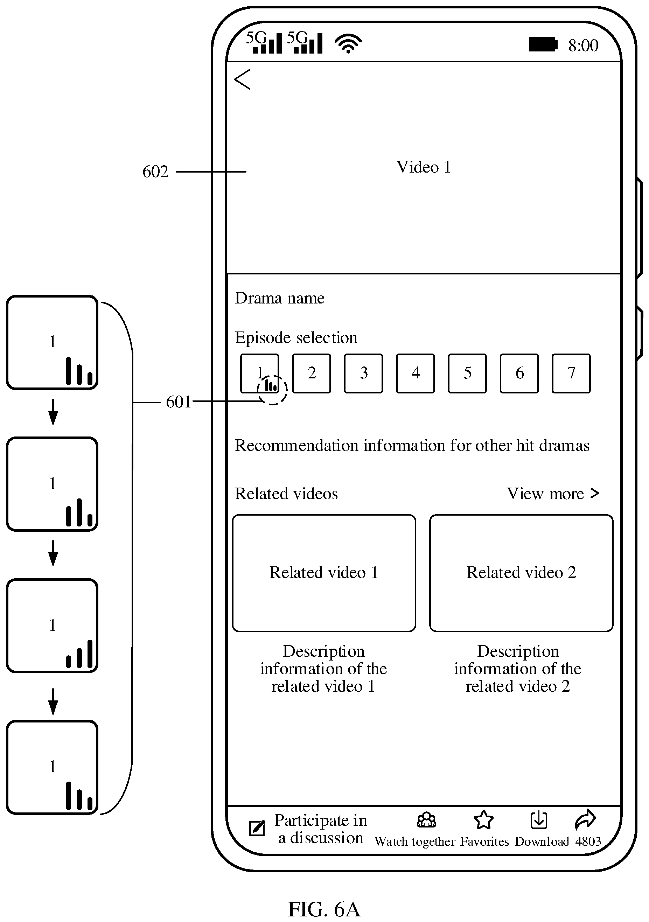

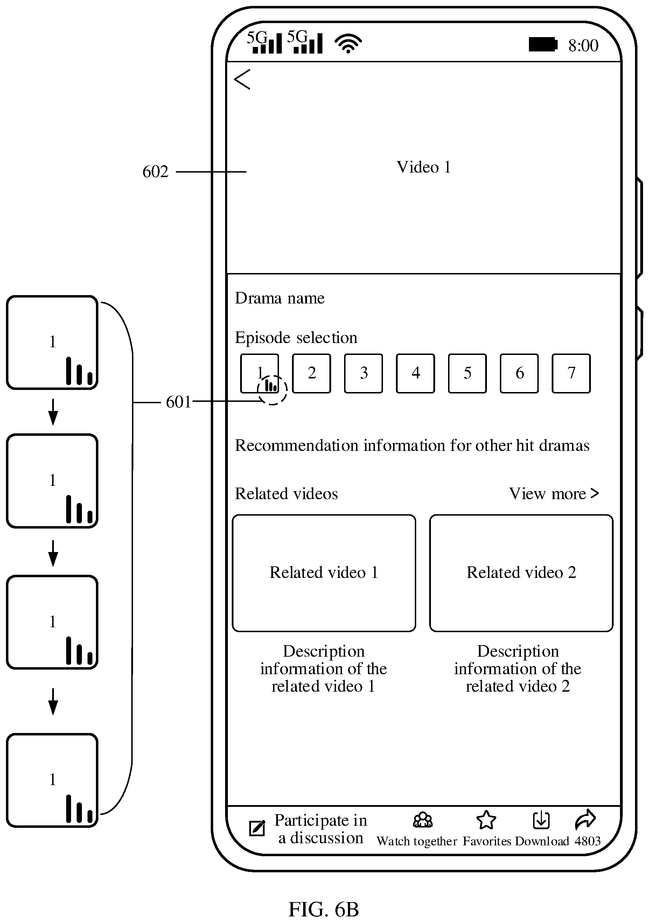

Referring to FIG. 6A and FIG. 6B, a video playback interface of a video APP is used as an example. It is assumed that the video playback interface includes non-sensitive animation elements including an "episode selection" component 601 and a "video 1" 602, and another non-animation element. The "episode selection" component 601 is configured to provide a prompt for a user that an episode is currently played. The non-animation elements include video description content, recommendation information, a bottom feature bar, and the like.

Referring to FIG. 6A, in the related technology, when the video playback interface of the video APP is displayed, the mobile phone draws and plays the "episode selection" component 601 and the "video 1" 602 at a default frame rate of a device. On a user visible dimension, when the video playback interface is displayed, the mobile phone plays the "video 1" 602, and simultaneously plays the "episode selection" component 601. Reference may be made to an enlarged display region on a left side of FIG. 6A, and a schematic diagram showing a change played by the "episode selection" component 601 is provided.

Referring to FIG. 6B, according to the interface display method provided in this embodiment of this application, when the video playback interface of the video APP is displayed, the mobile phone draws and plays the "video 1" 602 at the default frame rate of the device. The mobile phone stops animation playback for "episode selection" component 601, and continuously displays a same image frame. Referring to an enlarged display region on a left side of FIG. 6B, on a user visible dimension, when the video playback interface is displayed, the mobile phone plays the "video 1" 602, and the image of the "episode selection" component 601 does not change with time.

It can be known by comparison that in the related technology, the mobile phone needs to continuously draw and play an image frame of the "episode selection" component 601 at the default frame rate of the device. However, according to the interface display method provided in this embodiment of this application, the mobile phone needs to draw only one image frame of the "episode selection" component 601, so that power consumption of displaying the "episode selection" component 601 is relatively small, and power consumption of displaying the video playback interface of the video APP is relatively small.

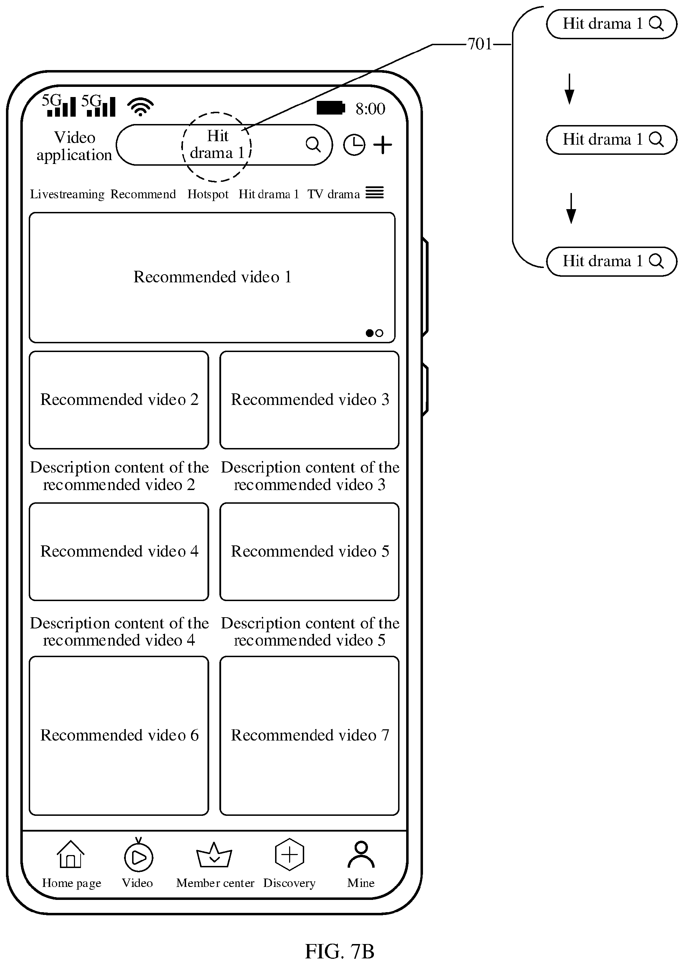

Referring to FIG. 7A and FIG. 7B, a main interface of a video APP is used as an example. It is assumed that the main interface of the video APP includes non-sensitive animation elements including a "search" component 701 and a recommended video, and another non-animation element. The "search" component 701 is configured to provide search recommendation of a current hit drama to a user, and does not affect browsing of recommended videos by the user. The non-animation elements include video description content, recommendation information, a bottom feature bar, and the like.

Referring to FIG. 7A, in the related technology, when the mobile phone displays the main interface of the video APP, the mobile phone draws and plays a recommended video 1 and the "search" component 701 at a default frame rate of a device. On a user visible dimension, when the main interface of the video APP is displayed, the electronic device plays the recommended video 1 and plays the "search" component 701. When the user clicks a recommended video 2/3/4/5/6/7, the corresponding recommended video is played. For a playback change of the "search" component 701, reference may be made to an enlarged display region on a right side of FIG. 7A. Displayed contents of the "search" component 701 are updated from a "hit drama 1" to a "hit drama 2", and then updated to a "hit drama 3", and the like with time.

Referring to FIG. 7B, according to the interface display method provided in this embodiment of this application, when the main interface of the video APP is displayed, the mobile phone draws and plays a recommended video 1 at a default frame rate of a device, stops animation playback for the "search" component 701, and continuously displays a same image frame. Referring to an enlarged display region on a right side of FIG. 7B, on a user visible dimension, when the main interface of the video APP is displayed, the electronic device plays the recommended video 1, and content displayed by the "search" component 701 does not change with time, and is always the "hit drama 1". When the user clicks a recommended video 2/3/4/5/6/7, the corresponding recommended video is played.

It may be learned by comparison that in the related technology, the mobile phone needs to continuously draw and play each image frame of the "search" component 701 at the default frame rate of the device. However, according to the interface display method provided in this embodiment of this application, the mobile phone needs to draw only one image frame of the "search" component 701, so that power consumption of displaying the "search" component 701 is relatively small, and power consumption of displaying the main interface of the video APP is relatively small.

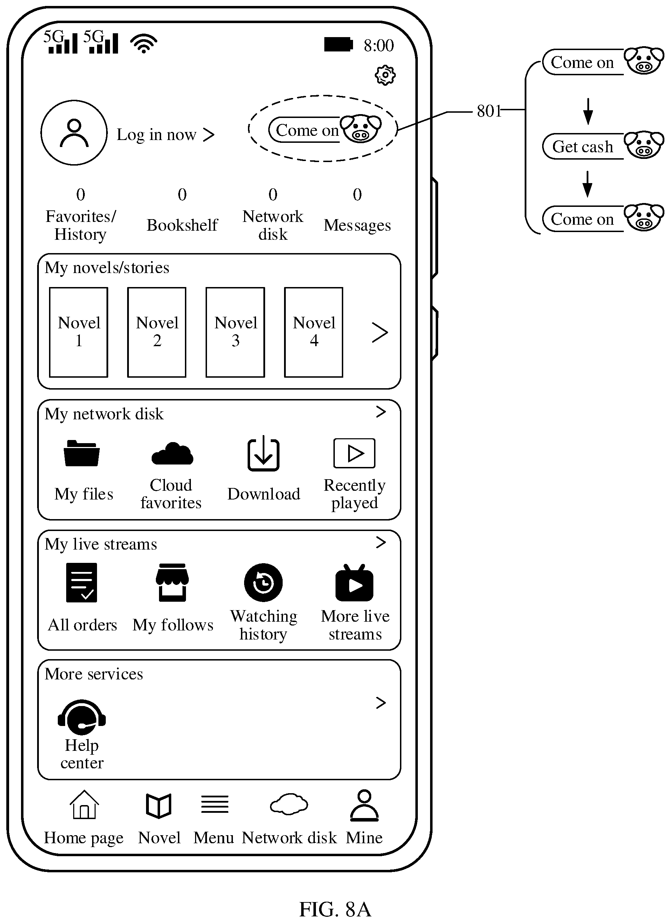

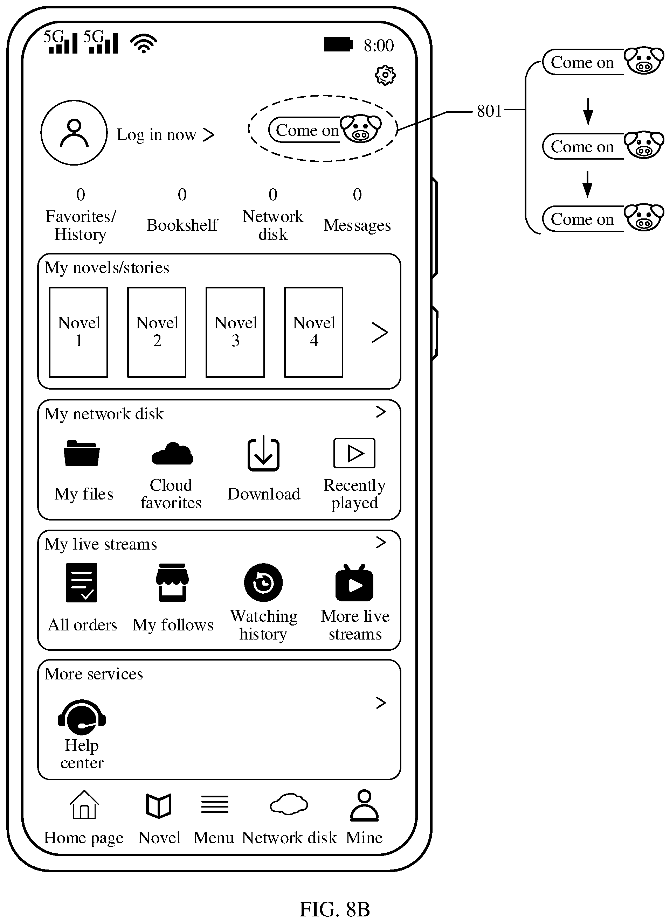

Referring to FIG. 8A and FIG. 8B, a setting interface of an application is used as an example. It is assumed that the setting interface of an application includes a non-sensitive animation element including a "little pig" component 801. The "little pig" component 801 is configured to prompt a user to enter some activity interfaces of a current application, and does not affect another function of the user in using the setting interface of an application.

Referring to FIG. 8A, in the related technology, when the mobile phone displays a setting interface of an application, the mobile phone draws and plays the "little pig" component 801 at a default frame rate of a device. Reference may be made to an enlarged display region on a right side of FIG. 8A, and a schematic diagram showing a change played by the "little pig" component 801 is provided. It can be seen that text displayed on the "little pig" component 801 changes.

Referring to FIG. 8B, according to the interface display method provided in this embodiment of this application, when the mobile phone displays a setting interface of an application, the mobile phone stops animation playback for the "little pig" component 801, so that the "little pig" component continuously displays a same image frame. Reference may be made to an enlarged display region on a right side of FIG. 8B, on a user visible dimension, when the mobile phone displays the setting interface of an application, the text displayed on the "little pig" component 801 is constantly "Come on", and does not change with time.

It may be learned by comparison that in the related technology, the mobile phone needs to continuously draw and play each image frame of the "little pig" component 801 at the default frame rate of the device. However, according to the interface display method provided in this embodiment of this application, the mobile phone needs to draw only one image frame of the "little pig" component 801, so that power consumption of displaying the "little pig" component 801 is relatively small, and power consumption of displaying the setting interface of an application is relatively small.

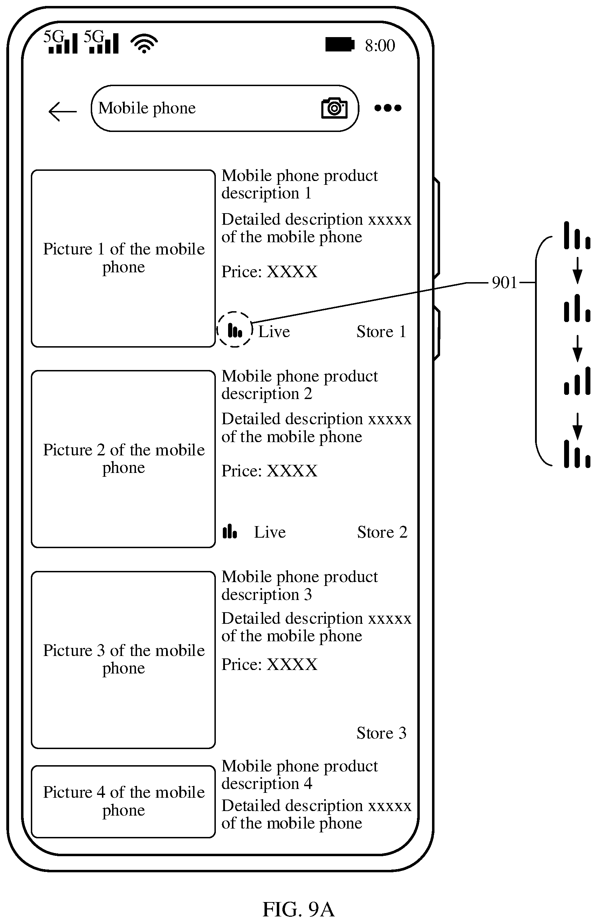

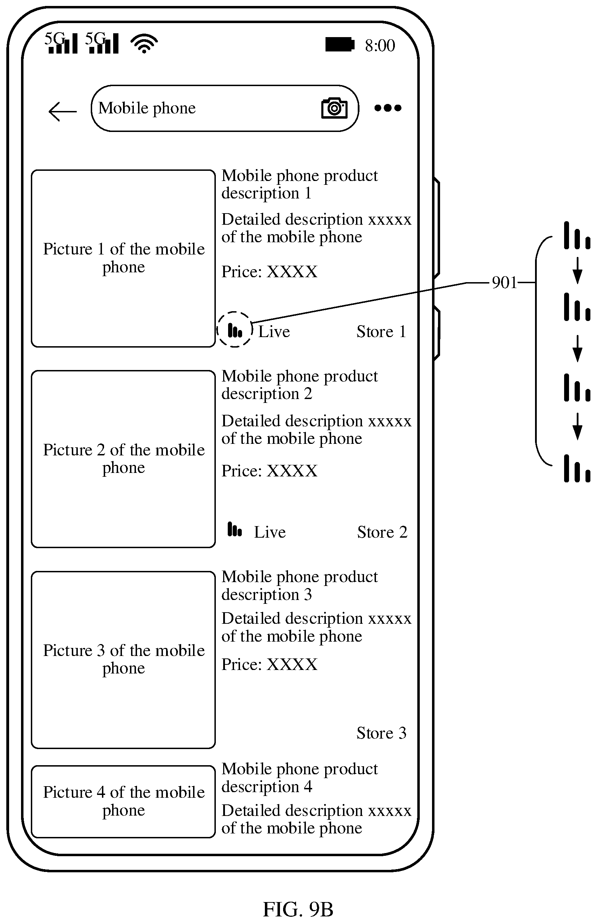

Referring to FIG. 9A and FIG. 9B, a mobile phone search interface of an electronic mall application is used as an example. The mobile phone search interface includes a search result, and the search result includes a non-animation element (information such as a mobile phone picture, a mobile phone product description, a detailed description, and a price). When a shop performs live streaming, the search result further includes a "live streaming" component 901.

Referring to FIG. 9A, in the related technology, when a search interface includes a merchant who is performing live streaming, the "live streaming" component 901 is drawn and played at a default frame rate of a device. Reference may be made to an enlarged display region on a right side of FIG. 9A, and a schematic diagram showing a change played by the "live streaming" component 112 is provided.

Referring to FIG. 9B, according to the interface display method provided in this embodiment of this application, when the search interface includes a merchant who is performing live streaming, animation playback for the "live streaming" component 901 is stopped, and one image frame is continuously displayed. Reference may be made to an enlarged display region on a right side of FIG. 9B, and a schematic diagram showing that a same image frame is constantly displayed by the "live streaming" component 901 is provided. It can be learned that the image displayed by the "live streaming" component 901 does not change with time.

Optionally, when a user browses the search interface, that is, the user performs a pull-down sliding operation on the search interface, although a position of the "live streaming" component 901 may slide and change with the sliding operation of the user, the animation of the "live streaming" component 901 is not affected by the operation of the user.

It may be learned by comparison that in the related technology, the mobile phone needs to continuously draw and play each image frame of the "live streaming" component 901 at the default frame rate of the device. However, according to the interface display method provided in this embodiment of this application, the mobile phone needs to draw only one image frame of the "live streaming" component 901, so that power consumption of displaying the "live streaming" component 901 is relatively small, and power consumption of displaying the search interface is relatively small.

In addition, the non-sensitive animation element may alternatively be another component.

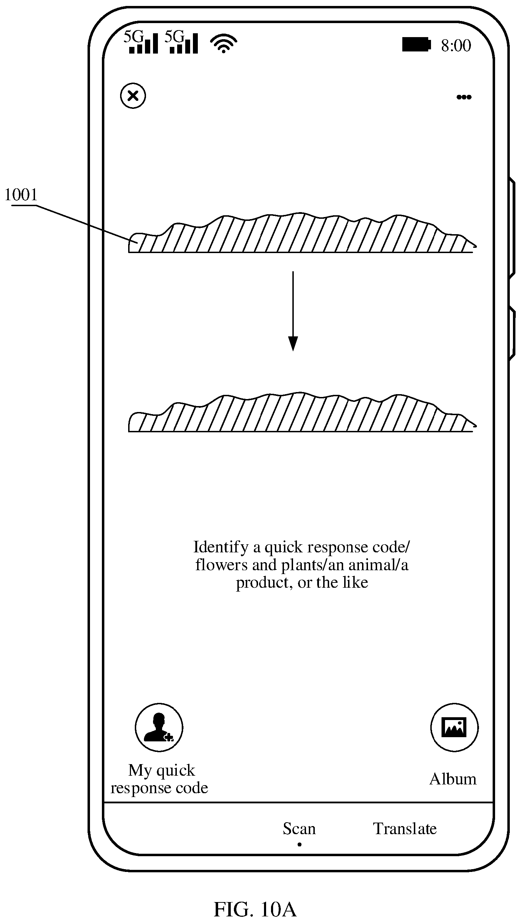

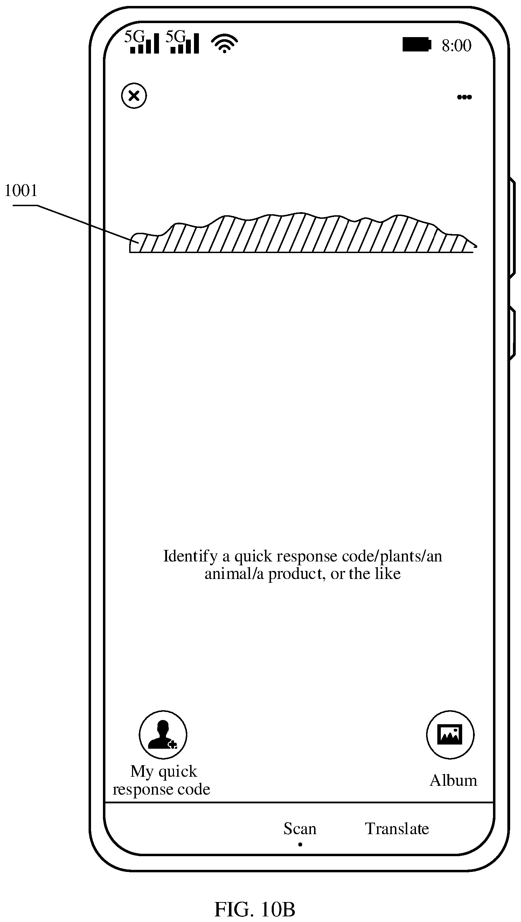

For example, referring to FIG. 10A and FIG. 10B, FIG. 10A and FIG. 10B provide scanning interfaces when a quick response code is scanned. Referring to FIG. 10A, in the related technology, during scanning, an animation in which a scan bar 1001 scans up and down is a non-sensitive animation element. Referring to FIG. 10B, according to the interface display method provided in this embodiment of this application, an animation in which the scan bar 1001 scans up and down stops, and always displays one image frame. A shadow part in FIG. 10A and FIG. 10B is a dynamic shadow effect of the scan bar. Scanning up and down on the scan bar 1001 stops, and continuously displaying one image frame does not affect an actual code scanning operation, reduces the quantity of times of drawing the image frame of the animation, and reduces power consumption.

For example, referring to FIG. 11A, FIG. 11A is a schematic diagram of a red packet interface. In the related technology, an "open" component 1101 in the red packet interface gradually flickers in an inner-to-outer direction of a concentric circle at a preset frequency, and is a non-sensitive animation element. According to the interface display method provided in this embodiment of this application, a gradient flickering animation of the animation element displayed on a user interface stops, and continuously displays one image frame. Stopping of the animation of the "Open" component 1101 does not affect an operation of opening the red envelope by the user, reduces the quantity of times of drawing the image frame of the animation, and reduces power consumption.

According to the interface display method provided in this application, when a user interface is displayed, a same image frame is continuously displayed for the non-sensitive animation element on the user interface, so that an electronic device needs to draw only one image frame of the non-sensitive animation element. By reducing the quantity of times of drawing an image frame of the non-sensitive animation element, a purpose of reducing power consumption of displaying the user interface including the non-sensitive animation element is achieved. The interface display method provided in this embodiment of this application may include step S1 to step S3 below.

Step S1: Receive an access request of a target interface.

The target interface may be any user interface displayed by the electronic device, and the target interface includes at least one non-sensitive animation element.

For example, if the target interface is a desktop of the mobile phone, the user may perform an operation such as a power-on operation on the mobile phone or an unlock operation on a screen of the mobile phone. Correspondingly, the mobile phone may detect the foregoing operation of the user, that is, the mobile phone receives the access request of the target interface.

If the target interface is a first interface after an application is started, the user may click an icon of the application on the desktop of the mobile phone. Correspondingly, the mobile phone may detect a click operation performed by the user on the icon of the application, that is, the mobile phone receives the access request of the target interface.

If the target interface is a non-first interface such as a second-level interface or a third-level interface of the application, the user may click, in an interface displayed by the application, a control that is configured to trigger displaying of the target interface. Correspondingly, the mobile phone detects a click operation performed by the user on the control, that is, the mobile phone receives an access request of the target interface.

If the target interface is a video playback interface of the application, the user may perform a video playback operation on the video application. Correspondingly, the mobile phone detects the foregoing video playback operation of the user, that is, the mobile phone receives an access request of the target interface.

If the target interface is a code scanning interface, the user may click a code scanning control in a communication or payment application. Correspondingly, the mobile phone detects a code scanning enabling operation of the user, that is, the mobile phone receives the access request of the target interface.

If the target interface is a search interface of the application, the user may click a search control in an interface displayed by the application. Correspondingly, the mobile phone detects a search request operation performed by the user, that is, receives the access request of the target interface.

Step S2: Determine a non-sensitive animation element from elements of the target interface in response to the access request.

Referring to the foregoing description, the non-sensitive animation element may include an animation element of a type such as a rotation animation, a translation animation, a scaling animation, or a gradient animation. In some embodiments, whether an element is a non-sensitive animation element may be determined based on a type of the element. For example, a type of a non-sensitive animation element may be preset in the electronic device, for example, a type such as the rotation animation, the translation animation, the scaling animation, or the gradient animation described above. For an element on the target interface, the electronic device may determine whether the type of the element is a preset type. If the type of the element is the preset type, the element is determined as the non-sensitive animation element, and if the type of the element is not the preset type, the element is determined as not the non-sensitive animation element.

For example, in some embodiments, in the electronic device, if the type of the animation element is the rotation animation, a parameter value of the type parameter of the animation element is: ROTATION, ROTATION_X and ROTATION_Y. If the type of an animation element is the translation animation, the parameter value of the type parameter of the animation element is TRANSLATION_X, TRANSLATION_Y, and TRANSLATION_Z. If the type of the animation element is the scaling animation, the parameter value of the type parameter of the animation element is SCALE_X and SCALE_Y. If the type of the animation element is the gradient animation, the parameter value of the type parameter of the animation element is ALPHA. Correspondingly, the electronic device may preset parameter values of type parameters corresponding to the foregoing 4 types. If the parameter value of the type parameter of the element on the target interface is one of preset parameter values corresponding to the 4 types, the element is determined as the non-sensitive animation element.

Because the display region of the non-sensitive animation element on a user interface is relatively small, in some embodiments, whether an element is the non-sensitive animation element may further be determined based on a type of the element and a size (for example, a width and a height of the display region) of the display region. For example, for an element on the target interface, whether the type of the element is the preset type and whether the size of the display region of the element is less than a preset size threshold may be determined. If the type of the element is the preset type and the size of the display region is less than the preset size threshold, the element is determined as the non-sensitive animation element; otherwise, the element is determined as not the non-sensitive animation element. The size of the foregoing display region described, for example, the width and/or the height of the display region. The preset size threshold may be, for example, a width threshold and a height threshold. Therefore, when the width of the display region is less than the width threshold and/or the height of the display region is less than the height threshold, the size of the display region is determined as less than the preset size threshold.

Step S3: Display the target interface, and display the non-sensitive animation element in the target interface in a manner of continuously displaying a same image frame.

In this embodiment of this application, the non-sensitive animation element in the target interface is displayed in a manner of continuously displaying the same image frame. For example, the clock icon 301 in FIG. 3B, the "spin record" component 401 and the "background music 1" component 402 in FIG. 4B, the "live streaming" component 501 in FIG. 5B, the "episode selection" component 601 in FIG. 6B, the "search" component 701 in FIG. 7B, the "little pig" component 801 in FIG. 8B, the "live streaming" component 901 in FIG. 9B, the scan bar 1001 in FIG. 10B, and the "open" component 1101 in FIG. 11A always display an image frame, and the image of the non-sensitive animation element does not change.

In this embodiment of this application, for normal display of an element other than the non-sensitive animation element in the target interface, for example, an icon other than the clock icon 301 in FIG. 3B, the "video 1" 403 in FIG. 4B, the non-animation element such as news content and a news figure in FIG. 5B, the "video 1" 602 and another non-animation element in FIG. 6B, the recommended video and another non-animation element in FIG. 7B, and the non-animation element in FIG. 8B, FIG. 9B, and FIG. 10B, a display effect on a user visible dimension is the same as that in the related technology.

Optionally, for each non-sensitive animation element in the target interface, an image of the non-sensitive animation element continuously displayed on the target interface may be drawn and displayed based on an attribute value of the non-sensitive animation element in a first image frame of the target interface, or may be drawn and displayed based on a preset expected attribute value corresponding to a type of the non-sensitive animation element. The attribute value of the non-sensitive animation element in the first image frame of the target interface may be determined by an application to which the user interface belongs. The preset expected attribute value corresponding to the type of the non-sensitive animation element may be preset in the electronic device, for example, a local framework layer of the electronic device.

Specifically, in an embodiment, the step may include:
displaying, for a first image frame of the target interface, the first image frame of the target interface based on the attribute value of the non-sensitive animation element in the first image frame; and
obtaining, for a non-first image frame of the target interface, an attribute value of the non-sensitive animation element in the interface image frame, and updating the attribute value of the non-sensitive animation element in the interface image frame to an attribute value of the non-sensitive animation element in the first image frame; and displaying the interface image frame of the target interface based on the updated attribute value of the non-sensitive animation element.

In another embodiment, this step may include:
obtaining, for each image frame of the target interface, an attribute value of the non-sensitive animation element in the interface image frame;
updating, when the attribute value of the non-sensitive animation element in the image frame is different from an expected attribute value of the non-sensitive animation element, the attribute value of the non-sensitive animation element in the image frame to the expected attribute value; and
displaying the image frame of the target interface based on the updated attribute value of the non-sensitive animation element.

Optionally, the expected attribute value corresponding to each type may be preset based on the type of the non-sensitive animation element. Correspondingly, when the attribute value of the non-sensitive animation element in each image frame is updated, the expected attribute value corresponding to the type of the non-sensitive animation element may be updated.

For example, the attribute value of a rotation animation may include a rotation angle in a value range of 0° to 360° (float). Therefore, in this embodiment of this application, a corresponding expected value of a rotation angle may be set for the rotation animation, for example, 0 degrees, so as to ensure that the image displayed on the target interface in the rotation animation is at a correct position. Therefore, an attribute value of the translation animation may similarly include a translation distance, and a value of the translation distance (float) is not limited. Therefore, in this embodiment of this application, an expected value of a corresponding translation distance, such as 0, may be set for the type of the translation animation. An attribute value of the scaling animation may include a scale ratio, and a value range is greater than or equal to 0 (float). Therefore, a corresponding expected scaling ratio value such as 1 may be set for the type of the scaling animation. An attribute value of the gradient animation may include transparency, and a value range is 0 to 1 (float). Therefore, in this embodiment of this application, a corresponding transparency expected value, such as 0, may be set for the type of the gradient animation.

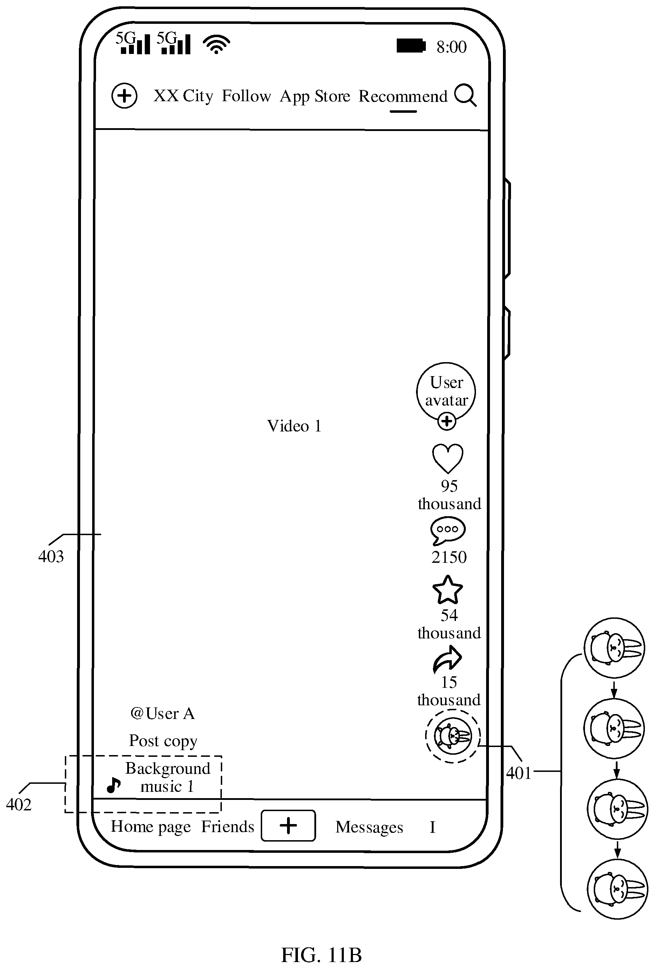

Using an example in which the target interface is the user interface of the short video APP in FIG. 4A and FIG. 4B, and the non-sensitive animation element is the "spin record" component 401 in FIG. 4A and FIG. 4B, the type of the "spin record" component 401 is the rotation animation, the attribute value of the "spin record" component 401 includes a rotation angle of a picture, and the value of the rotation angle may range from 0 degrees to 360 degrees. As the rotation angle gradually changes from 0 degrees to 360 degrees, the picture of the "spin record" component 401 rotates again, which circulates. As the value of the rotation angle gradually changes from 0 degree to 360 degrees again, the picture of the "spin record" component 401 rotates again, which circulates. Therefore, on the user visual dimension, the "spin record" component 401 keeps rotating. The short video APP may set an initial value of the rotation angle of the image of the "spin record" component 401 to any value from 0 degrees to 360 degrees, for example, 90 degrees. As a result, when the electronic device starts to display the user interface, an animation effect of the "spin record" component 401 is rotating the image from a position in which the image is rotated by 90 degrees, for example, as shown in the right enlarged display region in FIG. 4A, and a 1^{st} image in the region is a display effect of rotating the picture of a small rabbit by 90 degrees. In this embodiment of this application, the electronic device may draw an image frame based on the initial value of a rotation angle of a picture set by a short video application for the "spin record" component 401, for example, 90 degrees. The image frame of the "spin record" component 401 is displayed on each frame of the user interface of the electronic device at a preset frame rate (for example, the preset frame rate of the device). Therefore, in this step, it is achieved that the image frame is continuously displayed on the user interface, and the animation of the "spin record" component 401 stops, for example, as shown in FIG. 11B.

The initial value of 90 degrees of the rotation angle of the picture which is set for the foregoing "spin record" component 401 is the attribute value of the first image frame of the "spin record" component 401 in the target interface, where the attribute value is set for the "spin record" component 401 in the short video APP. Because the initial value is 90 degrees, in this embodiment of this application, an image that is drawn by the electronic device based on the initial value 90 degrees and continuously displayed on the user interface constantly shows a display effect of rotating the picture of a small rabbit by 90 degrees, as shown in the enlarged display region on the right side of FIG. 11B. To further improve use experience of a user, for example, to ensure that the picture of the "spin record" component 401 continuously displayed on the user interface is in a correct position, so as to achieve a display effect that the small rabbit in the picture of the small rabbit continuously displayed in FIG. 4B is in an upright state, in this embodiment of this application, the expected value of the rotation angle corresponding to the rotation animation may be preset to 0 degrees. Therefore, the electronic device may draw an image frame of the "spin record" component 401 based on the expected value of the rotation angle of 0 degrees, and continuously display the image frame on the user interface, thereby achieving, for example, the display effect of the "spin record" component 401 in FIG. 4B.

In this embodiment of this application, for the non-sensitive animation element in the target interface, each image frame of the non-sensitive animation element is not drawn and played at the default frame rate of the device, and only one image is continuously displayed, so that the mobile phone needs to draw only one image frame for the non-sensitive animation element, thereby reducing a quantity of times of drawing an image of the non-sensitive animation element on the target interface, and reducing power consumption of displaying the target interface by the mobile phone.

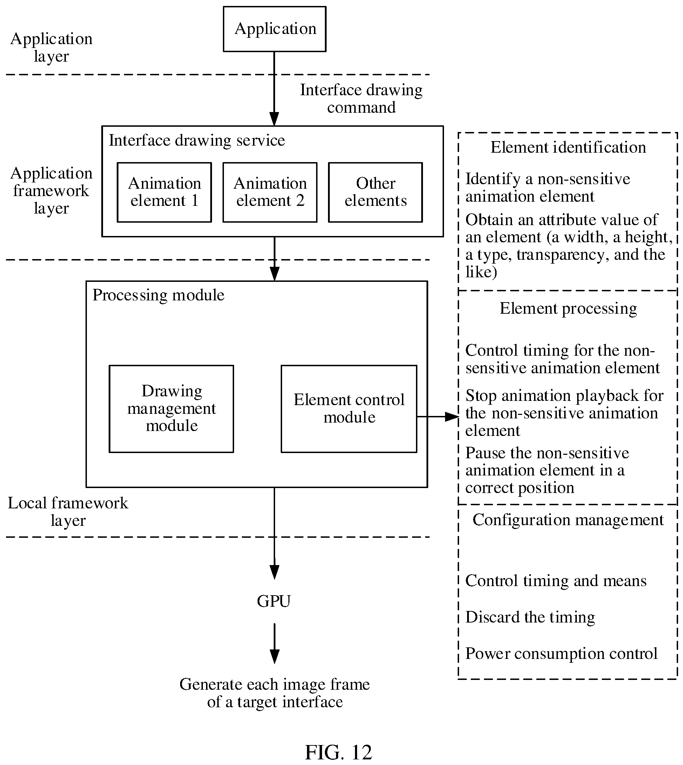

FIG. 12 is a schematic structural diagram of an electronic device according to an embodiment of this application. Implementation of the interface display method according to this embodiment of this application is further described below with reference to a structure of an electronic device shown in FIG. 12.

In FIG. 12, it is assumed that a software architecture of the electronic device is an Android^{®} system architecture, a target interface is a user interface displayed by an application, and a process of drawing, rendering, and displaying the target interface includes the following.

After receiving an access request of the target interface, an application of an application layer transmits an interface drawing command to an interface drawing service of an application framework layer.

An interface drawing service of an application framework layer parses an interface drawing command to obtain display parameters of elements (for example, the animation element 1, the animation element 2, and another element in FIG. 12) in the target interface, and sends the display parameters of the elements in the target interface to a processing module of a local framework layer.

Optionally, the interface drawing service of the application framework layer may determine a display parameter of each element in each image frame of the target interface, and send the display parameter of each element in each frame of picture of the target interface to the processing module of the local framework layer. Alternatively, when delivering the interface drawing command, the application may also deliver the display parameter of elements in each image frame of the target interface. Therefore, the interface drawing service of the application framework layer may directly parse the obtained display parameter of the elements in each image frame of the target interface and send the display parameter to the processing module of the local framework layer.

The drawing management module of the local framework layer may determine display information of each image frame of the target interface based on the display parameter of each element in the target interface, and send the display information to a GPU.

The GPU may draw, render, combine, and output for display of each image frame of the target interface based on the display information of each image frame of the target interface.

Optionally, for a first image frame of the target interface, the GPU draws and renders an image of each element in the first image frame of the target interface, and then combines the image of the elements, to obtain the first image frame on the target interface. For a non-first image frame such as a second image frame and a third image frame of the target interface, to reduce excessive drawing of the GPU, the GPU may redraw and render only an element that is changed in a current image frame of the target interface relative to a previous image frame of the target interface, and does not need to repeatedly draw and render an element that is not changed. The GPU directly uses an image obtained through drawing and rendering previously, and then combines images of the elements to obtain the current image frame of the target interface. Therefore, for the animation element in the target interface, the GPU needs to draw and render each image frame of the animation element based on the frame rate, so that the GPU can accurately synthesize each image frame of the target interface. For each non-animation element in the target interface, the GPU needs to perform drawing and rendering only once, to obtain one image frame of the non-animation element. The GPU uses the image frame of the non-animation element to perform combination when combining each image frame of the target interface.

Using the user interface of the short video APP shown in FIG. 4A as an example, the GPU draws and renders the images of the "spin record" component 401, the "background music 1" component 402, the sensitive animation element "video 1" 403 and the non-animation elements on the first image frame of the target interface, and combines the drawn images of each of the elements, to obtain the first image frame of the user interface. Then, the GPU redraws and renders images of the "spin record" component 401, the "background music 1" component 402, and the "video 1" 403 on the 2^{nd} image frame of the target interface, and obtains the 2^{nd} image frame on the user interface by combining the images of the "spin record" component 401, the "background music 1" component 402, and the "video 1" 403 on the 2^{nd} image frame of the target interface with the images of the non-animation elements obtained from previous drawing and rendering. Then, the GPU redraws and renders the images of the "spin record" component 401, the "background music 1" component 402, and the "video 1" 403 on a 3^{rd} image frame of the target interface, and obtains the 3^{rd} image frame on the user interface by combining the images of the "spin record" component 401, the "background music 1" component 402, and the "video 1" 403 on the 3^{rd} image frame of the target interface with the images of the non-animation elements obtained from previous drawing and rendering. By analogy, each image frame on the user interface may be combined based on the preset frame rate.

To enable the GPU to learn which elements need to be redrawn and rendered when combining each image frame of the target interface, a return notification management module of the local framework layer needs to determine, for each image frame of the target interface, an element that is changed relative to a previous image frame; generate, based on the changed element, display information corresponding to each of the image frame of the target interface; and send the display information to the GPU, so that the GPU may redraw and render the changed elements through the foregoing method, thereby obtaining each image frame of the target interface through combination.

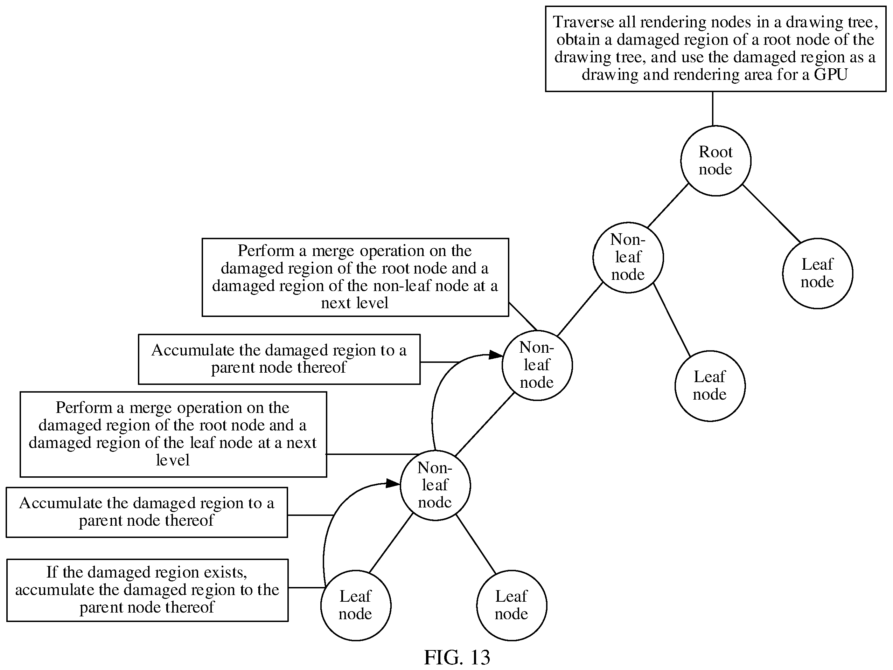

Specifically, as shown in FIG. 13, a drawing management module of a local framework layer may generate a drawing tree (draw tree) corresponding to each image frame on a target interface according to a display parameter of each element in each image frame of the target interface. The drawing tree includes a plurality of rendering nodes (RenderNode), and each of the rendering nodes represents an element on the user interface. Each rendering node includes at least one display list (DisplayList). The display list is a basic drawing element, and includes information such as a type and an attribute value of an element. The attribute value of an element may include, for example, a position, a size, an angle, or transparency. The drawing management module may determine display information of each image frame of the target interface based on the drawing tree corresponding to each image frame of the target interface, and further send the display information to the GPU. Referring to FIG. 13, a rendering node at a first level in the drawing tree is referred to as a root node. A rendering node at a non-first level is referred to as a non-leaf node if the rendering node has a rendering node at a next level, and is referred to as a leaf node if not having a render node at a next level.

Reference is made to FIG. 13 for a process in which a processing module determines, for an image frame of a target interface, an element that needs to be redrawn and rendered. The process includes the following.

The drawing management module may traverse all rendering nodes in the drawing tree through a method such as a depth recursion algorithm or a scope recursion algorithm. For each rendering node, the drawing management module determines whether the rendering node exists in a drawing tree of a previous image frame of the target interface. If the rendering node does not exist, it is determined that there is a damaged region of the rendering node. If the rendering node exists, an attribute value of the rendering node is compared with an attribute value of the rendering node in the drawing tree of the previous image frame of the target interface (that is, an attribute value of a corresponding element in the previous image frame of the target interface), to determine whether there is the damaged region for the rendering node. If the damaged region exists, the rendering node is recorded, and the damaged region of the rendering node is added to a parent node of the rendering node. Therefore, for the rendering node as the parent node, a final damaged region of the rendering node is a combined region of the damaged region of the rendering node and a damaged region of a child node of the rendering node.

The damaged region of each rendering nodes may be a region in which a current image frame of the target interface changes relative to a previous image frame of the target node due to a dynamic change of the rendering node. If an attribute value of the rendering node in the current image frame of the target interface is the same as an attribute value of the rendering node in the previous image frame of the target interface, no damaged region exists in the rendering node; otherwise, the damaged region exists.

The damaged region of the rendering node may be calculated and obtained based on a change of the attribute value of the rendering node. A specific calculation method is described as follows as an example. When the damaged region of the rendering node is obtained, the display region of the rendering node may be directly determined as the damaged region of the rendering node if no conversion matrix exists in the rendering node. For example, if a display region of a rendering node 1 is a circular region, and no conversion matrix exists when the circular region rotates, a damaged region of the rendering node 1 is the circular region. If the conversion matrix exists in the rendering node, the damaged region of the rendering node is calculated and obtained based on a boundary (bounds) of a smallest circumscribed circle of the display region. For example, if the conversion matrix exists in a rendering node, a region in which a smallest circumscribed circle of the display region is located is obtained as the damaged region. Alternatively, if the conversion matrix exists in the rendering node, a region in which a smallest circumscribed matrix of the display region is located is obtained as the damaged region. For example, if a display region of a rendering node 2 is a rectangular region, and the conversion matrix exists when the rectangular region rotates, a damaged region of the rendering node 2 is a region in which a smallest circumscribed circle of the rectangular region is located.

The electronic device traverses all rendering nodes in an entire drawing tree of the target interface, obtains a damaged region of a root node of the drawing tree of the target interface, uses the damaged region as a drawing and rendering region, and sends, to the GPU, the damaged region and a recorded element that needs to be drawn and rendered together, so that the GPU redraws and renders the drawing and rendering region based on the element that needs to be drawn and rendered.

With reference to the foregoing method for determining the drawing and rendering region of the GPU, to implement the interface display method in this embodiment of this application, in this embodiment of this application, a processing module may be set on a local framework layer (native). In addition to the foregoing drawing management module, the processing module further includes an element control module. The element control module manages a triggering moment, identifies the non-sensitive animation element on the target interface after the non-sensitive animation element is triggered, and stops animation playback for the non-sensitive animation element in the target interface.

In a first embodiment and a second embodiment below, the attribute value of the non-sensitive animation element in each image frame of the target interface may be updated to the preset expected attribute value corresponding to the type of the non-sensitive animation element, so that in each finally displayed image frame of the target interface, the image of the non-sensitive animation element is drawn, rendered, and displayed based on the expected attribute value.

In the first embodiment, after the drawing management module generates the drawing tree corresponding to each image frame of the target interface, and before the drawing management module traverses all rendering nodes in the drawing tree to determine the display information corresponding to the image frame of the target interface, the element control module may first traverse all of the rendering nodes in the drawing tree (that is, traverse each element in the target interface), determine whether each rendering node is the non-sensitive animation element, and modify an attribute value of the rendering node into the expected attribute value corresponding to the type of the rendering node when the rendering node is the non-sensitive animation element.

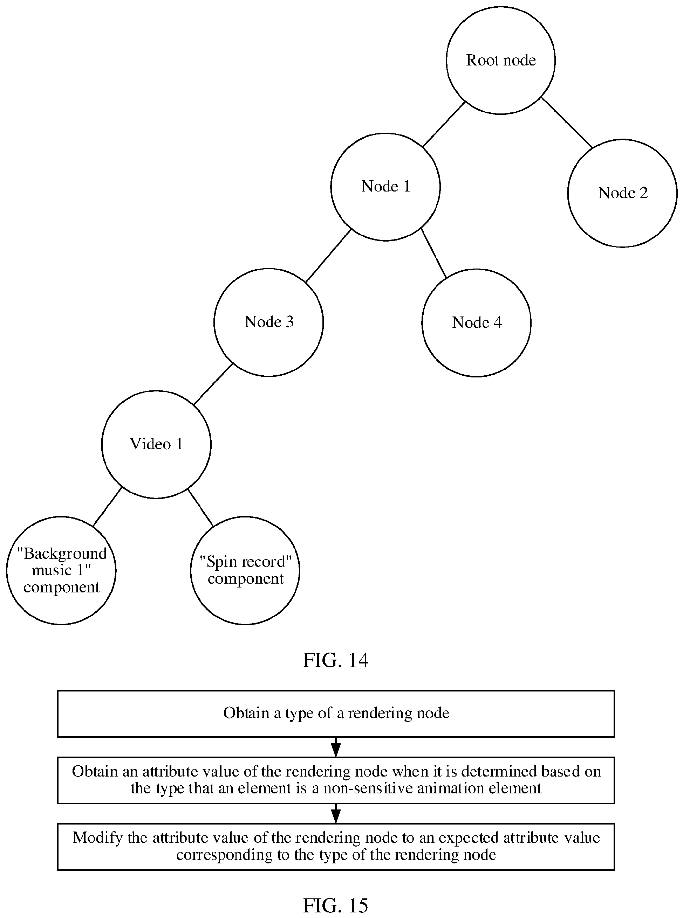

An example in which it is determined whether the element is the non-sensitive animation element based on the type of the rendering node is used. As shown in FIG. 15, processing steps of an element node for each rendering node includes: The element control module obtains the type of each rendering node; obtains the attribute value of the rendering node when it is determined based on the type that an element is the non-sensitive animation element; and modifies the attribute value of the rendering node to the expected attribute value corresponding to the type of the rendering node.

An example in which the user interface of the short video APP shown in FIG. 4B is the target interface is used. It is assumed that the drawing tree corresponding to each image frame of the target interface is shown in FIG. 14. The drawing tree includes a node corresponding to the "video 1", a node corresponding to the "background music 1" component, a node corresponding to the "spin record" component, a root node, and a node 1-a node 4 representing nodes corresponding to other elements in the target interface. It may be understood that the drawing tree in FIG. 14 is merely used for principle description, and is not used to limit an implementation of an actual drawing tree of the user interface of the short video APP shown in FIG. 4B. It may be understood that a structure of the drawing tree corresponding to different frames of image of the target interface may be the same, and a display list of a same rendering node in different drawing trees may be different. When the element control module traverses all rendering nodes in the drawing tree, for the "video 1", it is determined whether the "video 1" is the non-sensitive animation element. Because the video 1 is not the non-sensitive animation element, the element control module does not process the attribute value of the "video 1" in the drawing tree. For the "spin record" component, it is determined whether the "spin record" component is the non-sensitive animation element, and it is determined that the "spin record" component is the non-sensitive animation element. Therefore, based on the type of the "spin record" component, that is, the rotation animation, a preset expected attribute value (for example, a rotation angle of a picture is 0 degrees) corresponding to the rotation animation is obtained, and an attribute value (for example, it is assumed that a rotation angle of a picture is 10 degrees) of the "spin record" component in the drawing tree is updated to the preset expected attribute value (for example, a rotation angle of a picture is 0 degrees) corresponding to the rotating animation. For the "background music 1" component, based on a processing procedure similar to that of the "spin record" component, an attribute value of the "background music 1" component in the drawing tree may be updated to a preset expected attribute value corresponding to the translation animation.

By such processing, in the drawing tree corresponding to each image frame of the target interface, rendering nodes corresponding to a same non-sensitive animation element have a same attribute value (all being an expected attribute value corresponding to the type of the rendering node). Therefore, when the drawing management module traverses all rendering nodes in the drawing tree to determine display information corresponding to an image frame corresponding to the target interface, because the attribute value of the rendering node corresponding to the same non-sensitive animation element in the drawing tree of the image frame is the same as an attribute value in a drawing tree of a previous image frame, no damaged region exists for the rendering node. Therefore, the finally determined display information corresponding to the image frame does not include the information about the rendering node, and when the display information is inputted to the GPU, the GPU does not redraw and render the image of the rendering node. The GPU only needs to draw and render the rendering node when combining the first image frame of the target interface.

For example, it is assumed that the drawing tree of each image frame starting from the first image frame of the target interface has a drawing tree structure shown in FIG. 14. For the first image frame of the target interface, after the element control module traverses the drawing tree of the first image frame and modifies the attribute value of the non-sensitive animation element (the "background music 1" component and the "spin record" component) to the expected attribute value, the drawing management node traverses the drawing tree of the first image frame of the target interface. Because there is no drawing tree of a previous image frame for comparison, the drawing management node may record all rendering nodes in the drawing tree of the first image frame, and combine damaged regions of all the rendering nodes to obtain the drawing and rendering region. The foregoing information is inputted to the GPU as the display information, and the GPU draws and renders, based on the display information, images of all elements on the first image frame of the target interface, to combine the first image frame of the target interface. However, for the second image frame of the target interface, after the element control module traverses the drawing tree of the second image frame and modifies the attribute value of the non-sensitive animation element (the "background music 1" component and the "spin record" component) to the expected attribute value, when the drawing management node traverses the drawing tree of the second image frame of the target interface, for the "video 1", because the attribute value in the drawing tree of the second image frame (that is, an attribute value of the animation element "video 1" in the second image frame of the target interface) is inconsistent with the attribute value in the drawing tree of the first image frame (that is, an attribute value of the animation element "video 1" in the first image frame of the target interface), the drawing management node may record the "video 1". The damaged region of the "video 1" is accumulated to a parent node "node 3" thereof. For the "spin record" component, because the element control module modifies both the attribute value of the "spin record" component in the drawing tree of the second image frame and the attribute value of the "spin record" component in the drawing tree of the first image frame into the expected attribute value of the rotation animation, the attribute values of the two are the same, and the drawing management node does not record the display information from the "spin record" component to the drawing tree of the second image frame. For the "background music 1" component, based on a processing procedure similar to that of the "spin record" component, the attribute value of the "background music 1" component in the drawing tree of the second image frame and the attribute value thereof in the drawing tree of the first image frame also remain the same, and the drawing management node does not record the display information from the "background music 1" component to the drawing tree of the second image frame. It may be learned that, in the method in this embodiment of this application, the display information of the second image frame of the target interface finally includes information about the "video 1", excluding the "background music 1" component and the "spin record" component, so that the GPU redraws and renders the image of rendering the "video 1", and does not redraw and render the "background music 1" component and the "spin record" component. Therefore, when the second image frame of the target interface is combined, the second image frame of the target interface is combined through the image of the "video 1" obtained from redrawing and rendering, and the images of the "background music 1" component and the "spin record" component obtained from previous drawing and rendering (that is, the images obtained from drawing and rendering when the first image frame of the target interface is combined). Therefore, in the second image frame of the target interface displayed by the electronic device, the image of the "video 1" changes, and the images of the "background music 1" component and the "spin record" component do not change. By analogy, each image frame of the target interface may be combined and displayed based on the frame rate, thereby achieving, for example, a display effect in which the "video 1" plays normally, and the images of the "background music 1" component and the "spin record" in the target interface shown in FIG. 4B do not change.

In the second embodiment, after the drawing management module generates the drawing tree corresponding to each image frame of the target interface, and when the drawing management module traverses all rendering nodes in the drawing tree to generate the display information corresponding to each image frame, for each of the rendering nodes traversed by the drawing management module, the element control module may first determine whether the rendering node is the non-sensitive animation element. If the rendering node is the non-sensitive animation element, the attribute value of the rendering node may be modified into the expected attribute value corresponding to the type of the rendering node, and then the drawing management module determines whether the damaged region exists in the rendering node.

Before the electronic device compares the attribute values of the rendering node corresponding to the non-sensitive animation element, the element control module first modifies the attribute value of the rendering node to the expected attribute value. Therefore, after comparison of the attribute value, based on a principle similar to that in the foregoing first embodiment, only when the drawing tree of the first image frame of the target interface is traversed, the rendering node corresponding to the non-sensitive animation element has the damaged region. When the drawing tree of each subsequent image frame (for example, the second image frame and the third image frame) is traversed, the rendering node corresponding to the non-sensitive animation element necessarily has no damaged region. As a result, display information of the first image frame of the target interface includes information about the rendering node corresponding to the non-sensitive animation element, and the display information of the non-first image frame (for example, the second image frame or the third image frame) of the target interface does not include information about the rendering node corresponding to the non-sensitive animation element. After the display information is inputted to the GPU, the GPU draws and renders the image of the non-sensitive animation element before combining the first image frame of the target interface, and does not redraw and render the image of the non-sensitive animation element when combining the non-first image frame of the target interface. Therefore, the GPU draws and renders the non-sensitive animation element on the target interface only once, so that the quantity of times of drawing and rendering a non-sensitive animation element is reduced. For a specific example, reference may be made to the example of the previous embodiment. A difference lies only in that the element control module modifies the attribute value of the non-sensitive animation element in the drawing tree at a different timing. Details are not described herein again.

In the foregoing embodiment, the attribute value of the non-sensitive animation element in each image frame of the target interface is modified into a preset expected attribute value of a corresponding type. In another embodiment, for the first image frame of the target interface, the attribute value of the non-sensitive animation element of the first image frame may not be modified, but the first image frame of the target interface is displayed based on the attribute value of the non-sensitive animation element in the first image frame indicated by the application. For the non-first image frame of the target interface, the attribute value of the non-sensitive animation element of the image frame is updated to the attribute value of the non-sensitive animation element in the first image frame, and then the image frame of the target interface is displayed based on the updated attribute value of the non-sensitive animation element.

Based on the above, in the third embodiment, after the drawing management module generates the drawing tree corresponding to the first image frame of the target interface, and before the drawing management module traverses all rendering nodes in the drawing tree to determine display information corresponding to the image frame of the target interface, the element control module may first traverse all rendering nodes in the drawing tree (that is, traverse each element of the target interface), to determine whether each of rendering nodes is the non-sensitive animation element. When the rendering node is the non-sensitive animation element, the attribute value of the rendering node is not modified, and the element control module records the attribute value of the rendering node as the target attribute value of the rendering node. After the drawing management module generates the drawing tree corresponding to the non-first image frame of the target interface, and before the drawing management module traverses all rendering nodes in the drawing tree to determine the display information corresponding to the image frame of the target interface, the element control module may first traverse all of the rendering nodes in the drawing tree (that is, traverse each element in the target interface), determine whether each rendering node is the non-sensitive animation element, and modify the attribute value of the rendering node to the target attribute value of the rendering node when the rendering node is the non-sensitive animation element.

Then, when the drawing management module traverses all of the rendering nodes in the drawing tree of the first image frame and determines the display information corresponding to the image frame of the target interface, the attribute value corresponding to the non-sensitive animation element recorded in the display information is an attribute value (for example, an initial value) indicated by the application for the non-sensitive animation element in the first image frame on the target interface through the interface drawing service of the frame layer. Subsequently, the attribute value corresponding to the non-sensitive animation element in the drawing tree of each image frame is also modified by the element control module to be the attribute value indicated by the application. Based on a similar implementation element in the foregoing embodiment, in this embodiment, it may be implemented that each non-sensitive animation element in the target interface continuously displays the first image frame of the non-sensitive animation element indicated by the application. For example, as shown in FIG. 11B, assuming that an initial value of a rotation angle indicated by a "spin record" component in the short video application is 90, the "spin record" component in the target interface is displayed in a form of continuously displaying a picture of a small rabbit that is rotated by 90 degrees.

In a fourth embodiment, when the element control module modifies the attribute value of the non-sensitive animation element in the drawing tree, the drawing management module may traverse each rendering node in the drawing tree of each image frame. Specifically, before comparing the attribute values of the rendering nodes when traversing each the rendering node of the drawing tree of the first image frame of the target interface, the drawing management module first determines whether the rendering node is the non-sensitive animation element. When the rendering node is the non-sensitive animation element, the attribute value of the rendering node is not modified, and the element control module records the attribute value of the rendering node as the target attribute value of the rendering node. Before comparing the attribute value of the rendering nodes when traversing each rendering node of the drawing tree of the non-first image frame of the target interface, the drawing management module first determines whether the rendering node is the non-sensitive animation element, and modifies the attribute value of the rendering node to the target attribute value when the rendering node is the non-sensitive animation element.

For a processing procedure and principle of this embodiment, reference may be made to the corresponding description of the foregoing second embodiment. In this embodiment, it may also be implemented that each non-sensitive animation element in the target interface continuously displays the first image frame of the non-sensitive animation element indicated by the application. For example, as shown in FIG. 11B, assuming that an initial value of a rotation angle indicated by a "spin record" component in the short video application is 90, the "spin record" component in the target interface is displayed in a form of continuously displaying a picture of a small rabbit that is rotated by 90 degrees.

According to the foregoing embodiments, the non-sensitive animation element in each image frame of the target interface may be displayed in a manner of continuously displaying the same image frame, so that the GPU draws and renders only one image frame of the non-sensitive animation element. Therefore, the quantity of times of drawing and rendering the non-sensitive animation element by the GPU is reduced, power consumption of displaying the non-sensitive animation element by the electronic device is reduced, and power consumption of displaying the target interface including the non-sensitive animation element is reduced.

An embodiment of this application further provides an electronic device, including a processor and a memory. The processor is configured to implement the method provided in embodiments of this application.

An embodiment of this application further provides a computer-readable storage medium. The computer-readable storage medium has a computer program stored therein. The computer program, when run on a computer, causes the computer to perform the method provided in embodiments of this application.

An embodiment of this application further provides a computer program product. The computer program product includes a computer program. The computer program, when run on a computer, causes the computer to perform the method provided in embodiments of this application.

In embodiments of this application, "at least one" refers to one or more, and "a plurality of" refers to two or more. "And/or" describes an association relationship between associated objects and represents that three relationships may exist. For example, A and/or B may represent that only A exists, both A and B exist, or only B exists. A and B may be singular or plural. The character "/" generally indicates an "or" relationship between associated objects. "At least one of the following items" or a similar expression refers to any combination of these items, including a single item or any combination of a plurality of items. For example, at least one of a, b, or c may represent a, b, c, a and b, a and c, b and c, or a, b, and c, where a, b, and c may be singular or plural.

A person of ordinary skill in the art may be aware that, units and algorithm steps described in embodiments disclosed in this specification can be implemented by electronic hardware or a combination of computer software and electronic hardware. Whether the functions are executed by hardware or software depends on specific applications and design constraint conditions of the technical solutions. A person skilled in the art may use different methods to implement the described functions for each particular application, but it is not considered that such implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, when any function is implemented in a form of a software functional unit and sold or used as an independent product, the function may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that may store program code, such as a USB flash drive, a mobile hard disk, a read only memory (Read-Only Memory, hereinafter referred to as ROM), a random access memory (Random Access Memory, hereinafter referred to as RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. An interface display method, applied to an electronic device, wherein the method comprises:
receiving an access request of a target interface;
determining an animation element of a first type from elements of the target interface in response to the access request; and
displaying the target interface, and displaying the animation element of the first type in the target interface in a manner of continuously displaying a same image frame.

2. The method according to claim 1, wherein the displaying the target interface, and displaying the animation element of the first type in the target interface in a manner of continuously displaying a same image frame comprises:
obtaining, for each interface image frame of the target interface, an attribute value of the animation element of the first type in the interface image frame;
updating, when the attribute value of the animation element of the first type in the interface image frame is different from a target attribute value of the animation element of the first type, the attribute value of the animation element of the first type in the interface image frame to the target attribute value; and
displaying the interface image frame of the target interface based on an updated attribute value of the animation element of the first type.

3. The method according to claim 2, further comprising:
displaying the interface image frame of the target interface based on the attribute value of the animation element of the first type in the interface image frame when the attribute value of the animation element of the first type in the interface image frame is the same as the target attribute value of the animation element of the first type.

4. The method according to claim 1, wherein the displaying the animation element of the first type in a manner of continuously displaying a same image frame comprises: displaying the animation element of the first type in a manner of continuously displaying a first image frame of the animation element of the first type.

5. The method according to claim 4, wherein the displaying the target interface, and displaying the animation element of the first type in the target interface in a manner of continuously displaying a same image frame comprises:
displaying, for a first interface image frame of the target interface, the first interface image frame of the target interface based on an attribute value of the animation element of the first type in the first interface image frame; and
obtaining, for a non-first interface image frame of the target interface, an attribute value of the animation element of the first type in the interface image frame, updating the attribute value of the animation element of the first type in the interface image frame to an attribute value of the animation element of the first type in the first interface image frame, and displaying the interface image frame of the target interface based on the updated attribute value of the animation element of the first type.

6. The method according to any one of claims 1 to 5, wherein the determining an animation element of the first type from elements of the target interface comprises:
obtaining a type of each element in the target interface; and
determining, as the animation element of the first type, an element among the elements of the target interface whose type is a preset type.

7. The method according to any one of claims 1 to 5, wherein the determining an animation element of the first type from elements of the target interface comprises:
obtaining a type of each element in the target interface and a size of a display region; and
determining, as the animation element of the first type, an element among the elements of the target interface whose type is a preset type and whose display region size is less than a preset size threshold.

8. The method according to any one of claims 1 to 5, wherein before the displaying the target interface, the method further comprises:
determining that a power saving mode of the electronic device is enabled; or
determining that a power saving mode displayed on an interface is enabled; or
determining that a battery level of the electronic device is not greater than a preset battery level threshold; or
determining that a real-time time is within a preset time threshold; or
determining that a usage habit of a user satisfies a preset trigger condition.

9. The method according to any one of claims 1 to 5, wherein the animation element of the first type comprises an animation element of at least one type such as a rotation animation element, a translation animation element, a scaling animation element, or a gradient animation element.

10. An electronic device, comprising:
a processor and a memory, wherein one or more computer programs are stored in the memory, the one or more computer programs comprise instructions, and the instructions, when executed by the processor, cause the electronic device to perform the method according to any one of claims 1 to 9.

11. A computer-readable storage medium, storing a computer program, wherein the computer program, when run on a computer, causes the computer to perform the method according to any one of claims 1 to 9.
